(19) Europäisches Patentamt
European Patent Office
Office européen des brevets

(11) EP 4 012 453 B1

(12) FASCICULE DE BREVET EUROPEEN

(45) Date de publication et mention de la délivrance du brevet:
**01.02.2023 Bulletin 2023/05**

(21) Numéro de dépôt: **21213574.3**

(22) Date de dépôt: **10.12.2021**

(51) Classification Internationale des Brevets (IPC):
***G01S 17/34*** (2020.01) ***G01S 17/36*** (2006.01)
***G01S 17/894*** (2020.01) ***G01S 7/4912*** (2020.01)
***G01S 7/4914*** (2020.01) ***G01S 7/481*** (2006.01)
***G01S 7/491*** (2020.01) ***G01S 7/497*** (2006.01)

(52) Classification Coopérative des Brevets (CPC):
**G01S 17/34; G01S 7/4811; G01S 7/4814; G01S 7/4816; G01S 7/4818; G01S 7/491; G01S 7/4914; G01S 7/4917; G01S 7/497; G01S 17/36; G01S 17/894**

# (54) SYSTÈME IMAGEUR LIDAR À DÉTECTION HÉTÉRODYNE DE TYPE FMCW COMPORTANT UN DISPOSITIF DE CORRECTION DE PHASE DU SIGNAL DE RÉFÉRENCE

LIDAR-BILDGEBUNGSSYSTEM MIT HETERODYNER DETEKTION VOM TYP FMCW MIT EINER VORRICHTUNG ZUR PHASENKORREKTUR DES REFERENZSIGNALS

LIDAR IMAGING SYSTEM WITH HETERODYNE DETECTION SUCH AS FMCW COMPRISING A REFERENCE SIGNAL PHASE CORRECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2020 FR 2013123**

(43) Date de publication de la demande:
**15.06.2022 Bulletin 2022/24**

(73) Titulaire: **Commissariat à l’énergie atomique et aux énergies alternatives**
**75015 Paris (FR)**

(72) Inventeurs:
- **DAAMI, Anis**
  **38054 GRENOBLE Cedex 09 (FR)**
- **FREY, Laurent**
  **38054 GRENOBLE CEDEX 09 (FR)**

(74) Mandataire: **INNOV-GROUP**
**310, avenue Berthelot**
**69372 Lyon Cedex 08 (FR)**

(56) Documents cités:
**FR-A1- 2 677 456** **US-A1- 2015 177 380**
**US-A1- 2020 256 995**

- **FIROOZ AFLATOUNI ET AL: "Nanophotonic coherent imager", OPTICS EXPRESS, vol. 23, no. 4, 19 février 2015 (2015-02-19), page 5117, XP055764834, DOI: 10.1364/OE.23.005117**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 012 453 B1

## Description

### DOMAINE TECHNIQUE

Le domaine de l'invention est celui des systèmes imageurs LIDAR à détection hétérodyne à onde continue modulée en fréquence (FMCW, pour *Frequency Modulated Continuous Wave,* en anglais).

### ÉTAT DE LA TECHNIQUE ANTÉRIEURE

Les systèmes imageurs LIDAR à détection hétérodyne de type FMCW permettent d'obtenir une cartographie de distance d'une scène éclairée. A ce titre, le document Aflatouni et al. intitulé Nanophotonic cohérent imager, Opt. Express 23 (4), 5117-5125 (2015) décrit un système imageur de ce type, adapté à éclairer toute la scène de manière instantanée et à déterminer la cartographie de distance de la scène éclairée.

Un tel système imageur repose sur le principe de la détection hétérodyne, dans le sens où on exploite des propriétés d'un signal hétérodyne formé par l'interaction entre un signal de référence et un signal rétrodiffusé par la scène. Ces deux signaux optiques sont cohérents entre eux et proviennent d'un même signal optique, dit primaire, émis par une source optique.

Plus précisément, un tel système imageur comporte :

◦ une source optique du signal dit primaire, cohérent, continu et modulé en fréquence ;
◦ un dispositif optique de projection d'une partie du signal primaire, dite signal objet, en direction d'une scène à éclairer de manière instantanée ;
◦ un dispositif optique de transmission d'une partie du signal primaire, dite signal de référence, en direction d'un photodétecteur matriciel ;
◦ le dispositif optique d'imagerie, adapté à recevoir une partie du signal objet alors rétrodiffusé par la scène éclairée, et à le transmettre pour ainsi former l'image de la scène éclairée au niveau du photodétecteur matriciel ;
◦ le photodétecteur matriciel, adapté à recevoir le signal objet rétrodiffusé et le signal de référence, lesquels interfèrent pour former un signal hétérodyne.

Le signal primaire présente une variation de fréquence instantanée (*chirp,* en anglais), avec par exemple une fréquence de départ $f_0$ et de bande B avec une période T. Le signal *chirpé* est une onde sinusoïdale dont la fréquence instantanée évolue ici linéairement au cours du temps.

Le photodétecteur matriciel reçoit le signal objet rétrodiffusé, qui est une réplique atténuée et retardée du signal objet avec un retard $\tau$. Le retard se traduit par une différence de fréquence $f_b$ entre les deux signaux dans l'intervalle [$\tau$ ; T], avec $T>>\tau$, à savoir entre le signal de référence et le signal objet rétrodiffusé.

Cette fréquence $f_b$, dite fréquence de battement, est égale à la différence entre la fréquence du signal objet (et donc le signal de référence) et le signal objet rétrodiffusé. On peut alors déterminer, à partir de cette fréquence de battement $f_b$, la distance D entre la scène éclairée et le photodétecteur matriciel.

On connaît par ailleurs les systèmes imageurs LIDAR tels que décrits dans les documents US2015/177380A1 et US2020/256995A1.

Cependant, la distribution spatiale d'intensité du signal objet rétrodiffusé peut présenter de la granularité laser, ou grains de speckle, et ainsi présenter une figure de speckle. On souhaite alors améliorer les performances du système imageur.

### EXPOSÉ DE L'INVENTION

L'invention a pour objectif de remédier au moins en partie aux inconvénients de l'art antérieur, et plus particulièrement de proposer un système imageur LIDAR à détection hétérodyne de type FMCW dont les performances sont améliorées alors même que le signal objet rétrodiffusé présente une figure de speckle. Les performances peuvent se traduire par une meilleure qualité du signal hétérodyne détecté par les pixels de détection, par exemple en termes d'intensité du signal hétérodyne (composantes continue et alternative), d'intensité de la seule composante alternative du signal hétérodyne, voire de son rapport signal sur bruit.

Pour cela, l'objet de l'invention est un système imageur LIDAR de type FMCW, comportant :

- une source de lumière cohérente, adaptée à émettre un signal primaire continu modulé en fréquence ;
- un dispositif optique de projection d'une partie du signal primaire, dite signal objet, sur une scène à éclairer de manière instantanée ;
- un dispositif optique de transmission d'une partie du signal primaire, dite signal de référence, vers un dispositif optique d'imagerie ;
- le dispositif optique d'imagerie, étant adapté à recevoir une partie du signal objet rétrodiffusée par la scène, dite signal objet rétrodiffusé, présentant une figure de speckle ;
- un photodétecteur matriciel, comportant une matrice de pixels de détection, chacun destiné à recevoir, dans un plan de réception conjugué à la scène par le système optique d'imagerie, le signal objet rétrodiffusé et le signal de référence qui forment un signal hétérodyne présentant une fréquence dite de battement représentative d'une distance entre le photodétecteur matriciel et la scène éclairée.

Selon l'invention, le système imageur comporte un dispositif de correction de phase, comportant :

- un modulateur spatial de phase, disposé sur le trajet du signal de référence en amont du dispositif optique d'imagerie, adapté à appliquer au signal de référence une distribution spatiale de phase dite corrigée ;

- une unité de calcul, connectée au photodétecteur matriciel et au modulateur spatial de phase, et adaptée à :

  - déterminer une distribution spatiale de phase corrigée optimale à appliquer au signal de référence par le modulateur spatial de phase ;
  - en fonction d'une première distribution spatiale représentative d'une distribution spatiale d'intensité du signal objet rétrodiffusé dans le plan de réception, détectée par le photodétecteur matriciel ;
  - de sorte que le signal de référence présente une distribution spatiale d'intensité dite corrigée dans le plan de réception optimisant une distribution spatiale d'un paramètre d'intérêt représentatif du signal hétérodyne, choisi parmi l'intensité du signal hétérodyne, une intensité d'une composante alternative du signal hétérodyne, ou d'un rapport signal sur bruit.

Certains aspects préférés mais non limitatifs de ce système imageur sont les suivants.

Les pixels de détection peuvent présentent une dimension latérale inférieure à $2\times\lambda\times NO$, où À est la longueur d'onde du signal objet rétrodiffusé et où NO est un nombre d'ouverture du dispositif optique d'imagerie.

Les dispositifs optiques de projection et de transmission peuvent comporter des éléments optiques en espace libre.

Le modulateur spatial de phase peut être un modulateur de phase à cristaux liquide.

Le dispositif optique de projection peut comporter des éléments optiques en optique guidée réalisés dans un substrat fonctionnalisé, dont une matrice de réseaux de diffraction adaptée à recevoir le signal primaire par un guide d'onde et à projeter le signal objet hors du substrat fonctionnalisé.

Le dispositif de correction de phase peut comporter des éléments optiques en optique guidée réalisés dans ledit substrat fonctionnalisé, le modulateur spatial de phase comportant une matrice de réseaux de diffraction adaptée à recevoir le signal de référence par un guide d'onde et à le projeter hors du substrat fonctionnalisé après lui avoir appliqué la distribution spatiale de phase corrigée.

Le dispositif optique de transmission peut comporter des éléments optiques en espace libre adaptés à transmettre le signal de référence projeté par le modulateur spatial de phase en direction du dispositif optique d'imagerie.

La matrice de pixels de détection peut être réalisée dans ou sur ledit substrat fonctionnalisé.

Les dispositifs optiques de transmission et d'imagerie peuvent être adaptés à transmettre le signal de référence et le signal objet rétrodiffusé en direction du photodétecteur matriciel suivant un même axe optique.

Le dispositif optique d'imagerie peut comporter au moins un élément optique en espace libre et un diaphragme d'ouverture, définissant ainsi, vis-à-vis du photodétecteur matriciel, un angle de champ, ainsi qu'une zone centrale délimitée latéralement par des rayons du signal objet rétrodiffusé de bord de champ de pleine lumière qui se propagent jusqu'à des pixels de détection dit d'extrémité situés en bordure de la matrice de détection.

Le dispositif optique de transmission et le dispositif optique d'imagerie peuvent être adaptés à former une image du signal de référence dans un plan intermédiaire orthogonal à l'axe optique du dispositif optique d'imagerie, formant ainsi une source lumineuse équivalente du signal de référence. La source lumineuse équivalente peut être contenue dans la zone centrale des rayons du signal objet rétrodiffusé de bord de champ de pleine lumière. La source lumineuse équivalente peut présenter en chaque point un angle d'émission du signal de référence au moins égal audit angle de champ du dispositif optique d'imagerie.

La source lumineuse équivalente peut présenter une dimension latérale au moins égale à celle de la zone centrale des rayons du signal objet rétrodiffusé de bord de champ de pleine lumière.

L'invention porte également sur un procédé détermination d'une cartographie de distance de la scène par un système imageur selon l'une quelconque des caractéristiques précédentes, dans lequel le paramètre d'intérêt est l'intensité du signal hétérodyne, le procédé comportant les étapes suivantes :

a/ projection, par le dispositif optique de projection, du signal objet vers la scène pour l'éclairer de manière instantanée ;

b/ détection, par le photodétecteur matriciel, de la première distribution spatiale d'intensité d'un signal optique incident représentatif du signal objet rétrodiffusé ;

c/ détermination, par l'unité de calcul, de la distribution spatiale de phase corrigée à appliquer au signal de référence par le modulateur spatial de phase ;

d/ application, par le modulateur spatial de phase, de la distribution spatiale de phase corrigée au signal de référence ;

e/ détection, par le photodétecteur matriciel, d'une distribution spatiale d'intensité du signal hétérodyne ;

f/ détermination, par l'unité de calcul, de la distribution spatiale du paramètre d'intérêt, à partir de la distribution spatiale d'intensité du signal hétérodyne détectée ;

réitération, le cas échéant, des étapes c/ à f/ en modifiant la distribution spatiale de phase corrigée, jusqu'à ce qu'un critère de détermination fonction de la distribution spatiale du paramètre d'intérêt atteigne une valeur seuil prédéfinie ;
g/ lorsque le critère de détermination atteint la valeur seuil prédéfinie, détermination de la cartographie de distance.

Le procédé de détermination peut comporter :

lors de l'étape b/, suspension de la transmission du signal de référence, de sorte que le signal optique incident est le signal objet rétrodiffusé ;
lors de l'étape c/, détermination de la distribution spatiale de phase corrigée, de sorte que la distribution spatiale d'intensité du signal de référence dans le plan de réception soit sensiblement égale à la distribution spatiale d'intensité du signal objet rétrodiffusé détectée, à partir d'une fonction de transfert prédéfinie exprimant la distribution spatiale d'intensité du signal de référence dans le plan de réception en fonction d'une distribution spatial de phase appliquée par le modulateur spatial de phase ;
lors de l'étape d/, la transmission du signal de référence n'est plus suspendue.

Le procédé de détermination peut comporter :

lors de l'étape b/, le signal optique détecté est le signal hétérodyne ;
les étapes c/ à f/ sont réitérées, la distribution spatiale de phase étant modifiée en fonction du critère d'optimisation à l'itération précédente, en fonction d'un algorithme d'optimisation prédéfini, jusqu'à ce que le critère d'optimisation atteigne la valeur seuil prédéfinie, optimisant ainsi la distribution spatiale du paramètre d'intérêt.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

les figures 1A et 1B sont des vues schématiques et partielles de deux exemples de système imageur permettant d'obtenir une cartographie de distance de toute la scène éclairée, dans une configuration en optique en espace libre (fig.1A) et dans une configuration en optique guidée (fig.1B) ;

les figures 2A et 2B sont des vues de quelques pixels de détection du système imageur illustré sur la fig.1A ou 1B, en coupe (fig.2A) et en vue de dessus (fig.2B), illustrant le champ optique du signal de référence, ainsi que celui du signal objet rétrodiffusé qui présente une figure de speckle ;

les figures 3A et 3B sont des vues schématiques et partielles d'un système imageur selon différents modes de réalisation, dans lesquels il comporte un dispositif de correction de la phase du signal de référence, dans une configuration en optique en espace libre (fig.3A) et dans une configuration en optique guidée (fig.3B) ;

la figure 4A illustre de manière schématique et partielle une partie du système imageur selon la configuration en optique guidée de la fig.3B, en vue en coupe et en vue de dessus, et la figure 4B illustre de manière schématique et partielle, en vue de dessus, le modulateur spatial de phase illustré sur la fig.4A ;

les figures 5A et 5B sont des vues de quelques pixels de détection du système imageur selon les modes de réalisation des fig.3A et 3B, en coupe (fig.5A) et en vue de dessus (fig.5B), illustrant le champ optique du signal de référence ayant une distribution spatiale de phase corrigée, et illustrant celui du signal objet rétrodiffusé qui présente une figure de speckle ;

les figures 6A et 6B sont des organigrammes illustrant des étapes de deux procédés de détermination d'une cartographie de distance de la scène par un système imageur selon un mode de réalisation ;

les figures 7A à 7D sont des vues schématiques et partielles du dispositif optique d'imagerie et de la matrice de pixels de détection, illustrant :

- fig.7A : pour deux pixels de détection opposés et situés en bordure de la matrice de détection : les rayons d'extrémité du signal objet rétrodiffusé, et les rayons d'extrémité d'une source lumineuse équivalente du signal de référence ;
- fig.7B : les rayons de bord de champ de pleine lumière du signal objet rétrodiffusé, mettant en évidence une zone centrale située au niveau du diaphragme d'ouverture ;
- fig.7C : pour un pixel de détection situé en bordure de la matrice de détection : les rayons d'extrémité du signal objet rétrodiffusé, et les rayons d'extrémité d'une source lumineuse équivalente du signal de référence, celle-ci étant située en amont du diaphragme d'ouverture ;
- fig.7D : les mêmes rayons que ceux illustrés sur la fig.7C, dans le cas où la source lumineuse équivalente est située dans le plan du diaphragme d'ouverture.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système imageur LIDAR à détection hétérodyne de type à signal continu modulé en fréquence (FMCW, pour *Frequency-Modulated Continuous-Wave,* en anglais). Il peut être réalisé dans une configuration en optique en espace libre et/ou dans une configuration en optique guidée.

Le système imageur est dit « LIDAR » (acronyme de *Light Detection and Ranging,* en anglais) dans la mesure où il est adapté à fournir une cartographie de la distance (ou image de distance) d'une scène éclairée par un signal optique cohérent. Dans le cadre de l'invention, le système imageur éclaire toute la scène de manière instantanée par un signal optique continu, et acquiert simultanément l'image de la scène éclairée pour en déterminer la distance. Le système imageur selon l'invention se distingue ainsi des systèmes LIDAR (de type à mesure par temps de vol (TOF, pour *Time Of Flight,* en anglais) ou même de type FMCW), dans laquelle la scène est « scannée », i.e. balayée spatialement par un signal optique.

De plus, le système imageur est dit à détection hétérodyne dans la mesure où, pour déterminer la distance de la scène éclairée, on détermine une fréquence dite de battement d'un signal hétérodyne formé par l'interaction entre un signal de référence d'un oscillateur local et un signal rétrodiffusé par la scène éclairée, ces deux signaux optiques étant cohérents entre eux. Le signal de référence et le signal projeté sur la scène sont en effet tous deux issus d'un même signal optique primaire émis par la source optique. La détection hétérodyne est de type FMCW dans la mesure où le signal primaire est un signal continu et modulé en fréquence.

Les figures 1A et 1B sont des vues schématiques et partielles d'un système imageur LIDAR 1 à détecteur hétérodyne de type FMCW, adapté à déterminer une image de distance d'une scène éclairée de manière instantanée par un signal optique continu et modulé en fréquence. Le système imageur 1 présente ici une configuration en espace libre (fig.1A) ou une configuration en optique guidée (fig.1B). Il s'agit ici d'exemples donnés à titre illustratif, étant entendu que des combinaisons et variantes de ces configurations sont possibles.

Le système imageur peut être de type *global shutter* où tous les pixels de détection sont lus au même instant. Le système imageur peut alors fournir une image de distance instantanée. En variante, il peut être de type *rolling shutter,* et donc présenter une lecture séquentielle des pixels de détection, par exemple ligne par ligne, où tous les pixels de détection d'une même ligne sont lus simultanément.

D'une manière générale, le système imageur 1 comporte :

- une source optique 10 d'un signal dit primaire, cohérent, continu et modulé en fréquence ;
- un dispositif optique de projection 20 d'une partie du signal primaire, dite signal objet, en direction d'une scène à éclairer de manière instantanée ;
- un dispositif optique de transmission 30 d'une partie du signal primaire, dite signal de référence, en direction d'un photodétecteur matriciel 50, ce dispositif optique étant avantageusement adapté à former une source lumineuse équivalente du signal de référence située dans une zone prédéfinie au niveau ou à proximité d'un diaphragme d'ouverture d'un dispositif optique d'imagerie 40 ;
- le dispositif optique d'imagerie 40, adapté à recevoir une partie du signal objet alors rétrodiffusé par la scène éclairée, et à le transmettre pour ainsi former l'image de la scène éclairée sur le plan de réception du photodétecteur matriciel 50, et à transmettre le signal de référence ;
- le photodétecteur matriciel 50, comportant une matrice de pixels de détection d'indices i,j, destinée à recevoir le signal objet rétrodiffusé et le signal de référence, lesquels interagissent pour former un signal hétérodyne, chaque pixel de détection étant avantageusement adapté à déterminer une distance de la scène éclairée à partir de la fréquence de battement du signal hétérodyne détecté.

Le système imageur 1 comporte une source optique 10 d'un signal dit primaire, cohérent continu et modulé en fréquence. La source optique 10 est de préférence une source laser émettant un signal primaire continu. A titre d'exemple, le signal primaire peut présenter une fréquence optique située dans l'infrarouge.

De plus, le signal primaire est modulé en fréquence, par exemple ici de manière linéaire, à partir d'une fréquence de départ $f_0$ sur une période de répétition T avec une largeur de bande B. Le signal est ici un signal *chirpé,* c'est-à-dire une onde sinusoïdale dont la fréquence instantanée évolue linéairement au cours du temps. A titre d'exemple, le signal primaire peut s'écrire :

$$s^{ref}(t) = A^{ref} e^{2\pi j\left(f_0 t + \frac{B}{2T} t^2\right)}$$

La source optique 10 présente une longueur de cohérence typiquement supérieure à la différence de chemin optique entre la voie de référence et la voie objet. La voie de référence est le trajet suivi par le signal de référence entre la source optique 10 et le photodétecteur matriciel 50. La voie objet est le trajet suivi par le signal objet à partir de la source optique 10 jusqu'à la scène, et le trajet suivi par le signal objet rétrodiffusé par la scène jusqu'au photodétecteur matriciel 50. Cette différence de chemin optique peut correspondre, au premier ordre, à deux fois la distance maximale entre le système imageur 1 et la scène.

La source optique 10 peut ainsi comporter, dans le cas d'une émission dans le domaine du proche infrarouge (entre 0.7 et 2$\mu$m), une source laser 11 de type à cavité verticale émettant par la surface (VCSEL, pour *Vertical-Cavity Surface Emitting Laser,* en anglais) qui a généralement une longueur de cohérence de l'ordre du mètre, voire une source laser du type à émission par la tranche (EEL, pour *Edge Emitting Laser,* en anglais) qui peut avoir une longueur de cohérence de l'ordre de la dizaine voire centaine de mètres.

Des éléments optiques passifs peuvent être situés sur le trajet optique du signal primaire, entre la source optique 10 et le dispositif optique de projection 20. Ainsi, dans l'exemple de la fig.1A, une lentille de mise en forme 12 peut être située en sortie de la source optique 10, et permet de collimater le faisceau optique tout en en élargissant sa dimension latérale, par exemple à un diamètre de quelques millimètres. De plus, un dispositif de filtrage spatial peut être présent pour supprimer les hautes fréquences spatiales. Ainsi, le signal primaire se propage de manière collimatée, avec un profil gaussien et un diamètre de l'ordre de quelques millimètres, par exemple 5mm.

Le système imageur 1 comporte ensuite un dispositif optique de projection 20, adapté à projeter une partie du signal primaire en direction d'une scène qui est à éclairer de manière instantanée. Par « scène », on entend la scène éclairée par le signal objet. Cette partie projetée du signal primaire est appelée signal objet. Ainsi, toute la scène est éclairée instantanément par le signal objet, qui présente donc une ouverture angulaire propre à éclairer toute la scène instantanément. De préférence, la scène est en outre éclairée uniformément, c'est-à-dire que le signal objet présente une intensité dont la distribution angulaire est constante.

Le dispositif optique de projection 20 ou le dispositif optique de transmission 30 comporte ici au moins un élément optique adapté à diviser le signal primaire en un signal objet d'une part et un signal de référence d'autre part. Dans l'exemple de la fig.1A, il peut s'agir, par exemple, d'une lame semi-réfléchissante ou d'un cube séparateur. Ici, le cube séparateur 31 transmet une partie du signal primaire, qui devient le signal objet, et réfléchit une partie du signal primaire, qui devient le signal de référence. La répartition en intensité du signal objet et du signal de référence est de préférence non égalitaire, et peut ainsi être de 90% pour le signal objet et de 10% pour le signal de référence. Dans le cas de la fig.1B, un même substrat fonctionnalisé comporte un guide d'onde d'entrée couplé à la source optique 10, qui s'étend jusqu'à une première matrice 22 de réseaux de diffraction assurant la projection du signal objet en direction de la scène, et jusqu'à une deuxième matrice 35 de réseaux de diffraction assurant la projection du signal de référence en direction du photodétecteur matriciel 50.

Dans le but d'éclairer la scène de manière instantanée et ici uniformément, le dispositif optique de projection 20 assure une mise en forme du signal objet. Pour cela, il comporte au moins un élément optique 21 adapté à rendre divergent le signal objet. L'ouverture angulaire du signal objet est telle que toute la scène est éclairée uniformément par le signal objet. Elle est de préférence sensiblement égale à l'angle de champ du dispositif optique d'imagerie 40 (par exemple égal à 20° environ). De plus, il peut comporter au moins un élément optique adapté à rendre la distribution angulaire de l'intensité constante, pour obtenir un profil plat de l'intensité, et non plus un profil gaussien. Bien entendu, les différents éléments optiques peuvent être distincts ou confondus.

Dans les exemples des fig.1A et 1B, en sortie du cube séparateur 31 ou de la première matrice 22 de réseaux de diffraction, un diffuseur 21 (en transmission) est disposé de sorte que le profil d'intensité du signal objet passe d'un profil gaussien à un profil plat. De plus, le même diffuseur 21 rend ici divergent le signal objet. Une lentille (non représentée) peut être située en aval du diffuseur (ou en amont de celui-ci) de sorte que l'ouverture angulaire présente une valeur prédéfinie, ici une valeur sensiblement égale à l'angle de champ du dispositif optique d'imagerie 40.

Le système imageur 1 comporte en outre un dispositif optique de transmission 30, adapté à transmettre une partie du signal primaire en direction du photodétecteur matriciel 50. Cette partie transmise du signal primaire est appelée signal de référence. Le signal de référence transmise correspond, dans le cadre de la détection hétérodyne, au signal d'un oscillateur local (LO, pour *Local Oscillator* en anglais).

Dans cet exemple, le dispositif optique de transmission 30 est adapté à ce que le signal de référence éclaire le photodétecteur matriciel 50 de manière uniforme. Pour cela, dans l'exemple de la fig.1A, il comporte ici un diffuseur 32, situé en aval du cube séparateur 31, adapté à rendre la distribution angulaire de l'intensité constante, pour ainsi obtenir un profil plat de l'intensité du signal de référence, et non plus un profil gaussien. Dans l'exemple de la fig.1B, la deuxième matrice 35 de réseaux de diffraction est configurée pour que la distribution spatiale d'intensité du signal de référence soit uniforme. Bien entendu, la distribution spatiale d'intensité du signal de référence peut ne pas être uniforme et présenter alors un profil différent, par exemple gaussien.

De plus, le dispositif optique de transmission 30 est adapté à ce que tous les pixels de détection du photodétecteur matriciel 50 reçoivent le signal de référence. Ceci va de pair avec le fait que tous les pixels de détection reçoivent également le signal objet rétrodiffusé. Aussi, le signal hétérodyne se forme au niveau de chaque pixel de détection, de sorte qu'une image de distance pourra être déterminée à partir de toute la matrice de pixels de détection. Dans l'exemple de la fig.1A, le dispositif optique de transmission 30 comporte au moins une lentille convergente 33, disposée en aval du diffuseur 32, permettant de mettre en forme le faisceau optique du signal de référence selon une ouverture angulaire prédéfinie. Celle-ci est préalablement définie, en tenant compte des différentes optiques du dispositif optique d'imagerie 40, pour que le signal de référence éclaire effectivement chaque pixel de détection. En variante, le dispositif optique de transmission 30 peut ne pas comporter de lentille permettant d'éclairer tous les pixels de détection. Il suffit de positionner correctement le diffuseur 32, en tenant compte de son cône de diffusion, du diamètre du signal de référence incident sur le diffuseur 32, de l'ouverture du dispositif optique d'imagerie 40 et de la taille de la matrice de détection du photodétecteur 50. Dans le cas de l'exemple de la fig.1B, les réseaux de diffraction de la deuxième matrice 35 sont dimensionnés de sorte qu'elle présente une ouverture angulaire permettant d'éclairer tous les pixels de détection.

De préférence, le diffuseur 32 et le plan de réception du photodétecteur matriciel 50 ne sont pas conjugués, pour ainsi éviter que l'image du diffuseur 32 ne se forme sur le photodétecteur matriciel 50, ce qui pourrait dégrader la qualité du signal hétérodyne à détecter. En revanche, le diffuseur 32 peut être conjugué à un plan dit intermédiaire situé au niveau ou à proximité du diaphragme d'ouverture du dispositif optique d'imagerie 40, de manière à former une source lumineuse équivalente 36 du signal de référence, comme expliqué en détail en référence aux fig.7A à 7D.

Le système imageur 1 comporte en outre un dispositif optique d'imagerie 40, adapté à recevoir une partie du signal objet rétrodiffusé par la scène, appelé signal objet rétrodiffusé, et à le transmettre en direction du photodétecteur matriciel 50. Il est en particulier adapté à former l'image de la scène éclairée sur le plan de réception du photodétecteur matriciel 50. Aussi, la scène éclairée et le plan de réception du photodétecteur matriciel 50 sont conjugués, à la profondeur de champ près.

Le signal objet rétrodiffusé $s^{or}(t)$ présente un retard $\tau$ par rapport au signal objet $s^{o}(t)$. Il peut s'écrire ainsi, dans le cas où l'on considère que la fréquence de décalage $f_D$ de la scène susceptible d'être injectée dans le signal objet rétrodiffusé $S^{or}(t)$ est nulle ($f_D$=0) :

$$s^{or}(t) = A^{or} e^{2\pi j\left(f_0(t-\tau)+\frac{B}{2T}(t-\tau)^2\right)}$$

Le dispositif optique d'imagerie 40 ou le dispositif optique de transmission 30 comporte ici au moins un élément optique adapté à combiner le signal objet rétrodiffusé et le signal de référence, c'est-à-dire à les transmettre en direction du photodétecteur matriciel 50 suivant le même axe optique. Il peut s'agir, dans l'exemple de la fig.1A, d'une lame semi-réfléchissante ou d'un cube combineur 34. Ici, un cube combineur 34 réfléchit le signal de référence en direction du photodétecteur matriciel 50 suivant l'axe optique, et transmet le signal objet rétrodiffusé suivant ce même axe optique. Les deux signaux optiques se propagent donc en direction du photodétecteur matriciel 50 sur une voie commune, suivant le même axe optique. Ainsi, la superposition des deux signaux optiques suivant le même axe optique est obtenue, améliorant la qualité du signal hétérodyne formé. Dans le cas de la fig.1B, le substrat fonctionnalisé 2 ainsi que la deuxième matrice 35 de réseaux de diffraction sont transparents vis-à-vis du signal objet rétrodiffusé, de sorte qu'il est transmis et superposé au signal de référence. En pratique, le substrat fonctionnalisé 2 transmet le signal objet rétrodiffusé sans réellement le perturber, dans la mesure où l'écart d'indices de réfraction est faible entre les guides d'onde et les réseaux de diffraction du signal de référence d'une part et le substrat support d'autre part (limitant ainsi les phénomènes de diffraction du signal objet rétrodiffusé), et dans la mesure où la surface des guides d'onde et des réseaux de diffraction est faible en comparaison de la taille du signal objet rétrodiffusé incident.

Le dispositif optique d'imagerie 40 présente des éléments optiques en espace libre, et comporte au moins une lentille et un diaphragme d'ouverture 42 qui définit la pupille physique. Notons que le diaphragme d'ouverture 42 peut ne pas être un objet physique distinct d'une lentille, mais être défini par le contour de la lentille. Il comporte un axe optique orthogonal au plan de réception du photodétecteur matriciel 50. Il est ici adapté à recevoir le signal objet rétrodiffusé ainsi que le signal de référence, pour permettre leur transmission en direction du photodétecteur matriciel 50 suivant un même axe optique et permettre ainsi une meilleure superposition des deux signaux optiques, améliorant ainsi la combinaison des deux signaux optiques par interférence, ce qui permet d'améliorer l'intensité du signal hétérodyne. Le dispositif optique d'imagerie 40 comporte ici plusieurs lentilles 41, 43, entre lesquelles est disposé le diaphragme d'ouverture 42.

Le système imageur 1 comporte en outre un photodétecteur matriciel 50, ayant une matrice de pixels de détection s'étendant dans un plan de réception. Le plan de réception du photodétecteur matriciel 50 est situé dans un plan conjugué de la scène par le dispositif optique d'imagerie 40 (à la profondeur de champ près). Autrement dit, l'image de la scène se forme dans le plan de réception du photodétecteur matriciel 50. Chaque pixel de détection est destiné à recevoir le signal de référence et le signal objet rétrodiffusé, lesquels interfèrent entre eux pour former un signal dit hétérodyne. Il peut s'agir d'un photodétecteur de type CMOS ou CCD.

Le signal hétérodyne $s^{het}(t)$ est issu de l'interaction entre le signal de référence $s^{ref}(t)$ et le signal objet rétrodiffusé $s^{or}(t)$. Il comporte une composante constante (destinée à être filtrée) et une composante alternative périodique $AC^{het}(t)$ qui forme le signal utile. Cette dernière peut s'écrire :

$$AC^{het}(t) = A^{ref} A^{or} e^{2\pi j\left(\frac{B}{T}\tau t+(f_0\tau-\frac{B}{2T}\tau^2)\right)}$$

où la fréquence de battement $f_b$ est égale à Bτ/T et donc à 2BD/cT, c étant la vitesse de la lumière. La détermination de la fréquence de battement $f_b$ permet donc d'obtenir la distance D entre la scène et le photodétecteur matriciel 50.

Les pixels de détection peuvent être formés d'une microlentille disposée en regard d'une photodiode. Comme l'illustrent les fig.2A et 2B, chaque pixel de détection présente une dimension latérale $d_{px}$ définie par la taille des microlentilles, alors que la zone photosensible des photodiodes présente une dimension latérale $d_{pd}$. Ici, on considère que le plan de détection est le plan dans lequel s'étendent les microlentilles.

Les pixels de détection sont avantageusement adaptés à déterminer la fréquence de battement du signal hétérodyne détecté. Pour cela, chaque pixel comporte une photodiode, par exemple de type pn, pin ou à avalanche, et un dispositif de conversion optique/électrique de manière à convertir le signal hétérodyne détecté en un signal électrique, par exemple une tension électrique. Le dispositif de conversion peut comporter un filtre pour filtrer la composante continue $DC^{het}$ du signal hétérodyne détecté $s^{het}(t)$ et ne garder que la composante alternative $AC^{het}$ ; un amplificateur de l'amplitude du signal hétérodyne filtré, un détecteur et compteur des variations périodiques du signal hétérodyne filtré, pour ainsi déterminer une valeur de la fréquence de battement du signal hétérodyne. La valeur de fréquence déterminée par chaque pixel de détection peut ensuite être transmise à une unité de calcul qui en déduit une cartographie de distance. La fréquence de battement peut être déterminée de manière simultanée pour tous les pixels de détection, de manière à obtenir une cartographie de distance (image de distance) instantanée de la scène alors éclairée (approche de type *global shutter)*. Comme indiqué précédemment, le système imageur 1 peut également présenter un fonctionnement en mode *rolling shutter.*

Ainsi, en fonctionnement, la source optique 10 émet le signal primaire cohérent, continu et modulé en fréquence, dont une partie (signal objet) est projetée par le dispositif optique de projection 20 sur la scène pour l'éclairer de manière instantanée. Le dispositif optique de transmission 30 transmet une partie (signal de référence) du signal primaire en direction du photodétecteur matriciel 50. Le dispositif optique d'imagerie 40 reçoit le signal objet rétrodiffusé et forme l'image de la scène éclairée sur la matrice de pixels de détection. Il reçoit ici également le signal de référence, qui est transmis en direction de la matrice de pixels de détection. Le signal de référence $s^{ref}(t)$ et le signal objet rétrodiffusé $s^{or}(t)$ interfèrent et forment en chaque pixel de détection un signal hétérodyne $s^{het}(t)$. Chacun des pixels de détection détermine ensuite la fréquence de battement $f_b$ du signal hétérodyne détecté, et la cartographie de distance de la scène éclairée est ensuite déterminée.

Les figures 2A et 2B illustrent, de manière schématique, des exemples des champs optiques (distributions spatiales d'intensité) du signal de référence $s^{ref}(t)$ et du signal objet rétrodiffusé $s^{or}(t)$, au niveau de quelques pixels de détection $P_{ij}$ du photodétecteur matriciel 50. La fig.2A est une vue en coupe transversale, et la fig.2B est une vue de dessus dans le cas où les grains de speckle présentent une dimension latérale supérieure à celle des pixels de détection. Bien entendu, les grains de speckle peuvent présenter une dimension latérale inférieure à celle des pixels de détection, sans que cela ne sorte du cadre de l'invention.

Plusieurs pixels de détection $P_{ij}$, $P_{i+1j}$, $P_{i+2,j}$ sont ici représentés sur la fig.2A (et $P_{ij}$, $P_{i+1,j}$, $P_{i,j+1}$ sur la fig.2B). Ils comportent chacun une microlentille 52 disposée en regard d'une photodiode 51. Les microlentilles 52 sont ici jointives et présentent une dimension latérale $d_{px}$ (qui définit ici la dimension latérale des pixels de détection), et les photodiodes 51 (zone effective de détection des photons incidents) présentent une dimension latérale $d_{pd}$, cette dimension $d_{pd}$ étant ici inférieure à la dimension $d_{px}$. On considère que le plan de réception du photodétecteur matriciel 50 correspond au plan de la matrice de microlentilles 52.

Le signal de référence $s^{ref}(t)$ peut présenter un champ optique tel que toute la matrice de détection, et donc toute la surface de chaque pixel de détection, est éclairée uniformément de manière instantanée. En revanche, le signal objet rétrodiffusé $s^{or}(t)$ peut présenter une figure de speckle, c'est-à-dire une distribution spatiale en intensité $I^{or}(t)$ mettant en évidence de la granularité laser, appelée par la suite grains de speckle. Cette figure de speckle provient du fait que la scène est un objet diffusant éclairé en lumière cohérente. Il y a donc interférences entre les différents rayons du signal optique rétrodiffusé $s^{or}(t)$, formant ainsi une figure de speckle formée de plusieurs grains de speckle (zones brillantes) entourés de zones sombres. Les grains de speckle sont déphasés les uns des autres de manière aléatoire. Plus précisément, le signal objet rétrodiffusé $s^{or}(t)$ présente une même fréquence, mais une distribution spatiale de phase non uniforme : la phase est sensiblement constante dans chacun des grains de speckle, mais est différente d'un grain de speckle à l'autre de manière aléatoire.

Les grains de speckle présentent une dimension latérale moyenne $d_{sp}$ qui est de l'ordre de $2\times\lambda\times NO$, où À est la longueur d'onde du signal objet rétrodiffusé $s^{or}(t)$ (égale à celle du signal primaire et au signal de référence, par exemple dans le visible ou le proche infrarouge), et NO est le nombre d'ouverture $NO = f_{di}/d_{do}$ du dispositif optique d'imagerie 40. Ici, $f_{di}$ est la distance focale et $d_{do}$ la dimension latérale (diamètre par ex.) du diamètre de la pupille d'entrée ou de sortie du dispositif optique d'imagerie 40. Ainsi, en fonction du nombre d'ouverture NO et de la dimension latérale $d_{px}$, les grains de speckle peuvent s'étendre sur un ou plusieurs pixels de détection, comme l'illustre la fig.2B, ou sur moins d'un pixel de détection. Il est avantageux que les grains de speckle présentent une taille supérieure à celle des pixels de détection, de manière à améliorer la détection du signal hétérodyne, et éviter que la présence de plusieurs grains de speckle dans un même pixel de détection ne dégrade la détermination de la fréquence de battement $f_b$ (du fait d'un déphasage entre ces grains de speckle). Aussi, le nombre d'ouverture peut être important, par exemple au moins égal à 2, et les pixels de détection peuvent présenter une taille au plus égale à 10$\mu$m.

On remarque ici que le champ optique du signal de référence, dont l'intensité optique est spatialement uniforme à l'instant t, est bien différent de celui du signal objet rétrodiffusé qui est caractérisé par la figure de speckle. Notons que ces figures sont ici schématiques pour privilégier la clarté. Ainsi, la taille d'un grain de speckle ne diminue pas après transmission par les microlentilles 52, dans la mesure où elle relève de l'optique diffractive et non pas de l'optique géométrique. Autrement dit, un grain de speckle présente une taille sensiblement égale, que l'on considère le plan des microlentilles 52 ou le plan des photodiodes 51.

On définit ici une distribution spatiale $S_{ij}^{or}(t)$ (répartition géométrique) des grains de speckle du signal objet rétrodiffusé $s^{or}(t)$ dans un pixel de détection $P_{ij}$ au niveau du plan de réception. Elle prend une valeur locale nulle ou quasi nulle lorsque le pixel de détection considéré est situé dans une zone sombre de la figure de speckle. Et elle présente une valeur non nulle lorsqu'un grain de speckle est présent dans le pixel de détection considéré. De la même manière, on définit une distribution spatiale $S_{ij}^{ref}(t)$ des zones brillantes du signal de référence dans le plan de réception. Dans le cas des fig.2A et 2B, cette distribution spatiale $S_{ij}^{ref}(t)$ est uniforme et présente une même valeur non nulle en chaque pixel de détection dans le plan de réception.

Or, il apparaît que cette différence entre la distribution spatiale $S_{ij}^{or}(t)$ des grains de speckle du signal objet rétrodiffusé $s^{or}(t)$ et la distribution spatiale $S_{ij}^{ref}(t)$ des zones brillantes du signal de référence $s^{ref}(t)$ peut impacter les performances du système imageur 1, et en particulier peut impacter la qualité du signal hétérodyne détecté en chaque pixel de détection, par exemple en termes d'intensité détectée (composantes continue et alternative), d'intensité de la composante alternative seule, et/ou du rapport signal sur bruit.

En effet, dans le cadre de la détection hétérodyne, le signal de référence permet d'amplifier le signal objet rétrodiffusé. La part utile du signal hétérodyne $s^{het}(t)$, à savoir l'intensité de sa composante alternative $AC_{ij}^{het}(t)$ pour un pixel de détection $P_{ij}$ est de l'ordre de

$$\sqrt{\left(E_{ij}^{ref} \times E_{ij}^{or}\right)} = \sqrt{\left(\frac{F_{ij}^{ref}}{S_{ij}^{ref}} \times \frac{F_{ij}^{or}}{S_{ij}^{or}}\right)},$$

où $E_{ij} = F_{ij} / S_{ij}$ est l'éclairement local, $F_{ij}$ étant le flux lumineux (nombre de photons) du signal incident sur une surface éclairée $S_{ij}$ du pixel de détection $P_{ij}$.

Or, si l'on considère par exemple les pixels de détection $P_{ij}$, $P_{i+1,j}$ $P_{i,j+1}$, $P_{i+1,j+1}$ illustrés sur la fig.2B, le grain de speckle, dont la surface est de l'ordre de $(2\times\lambda\times NO)^2$, éclaire ici les surfaces $S_{ij}^{or}(t)$, $S_{i+1,j}^{or}(t)$, $S_{i,j+1}^{or}(t)$, et $S_{i+1,j+1}^{or}(t)$ qui sont chacune de l'ordre du quart de la surface $(d_{px})^2$ de chaque pixel de détection. En revanche, le signal de référence $s^{ref}(t)$ éclaire toute la surface des pixels de détection, de sorte que les surfaces $S_{ij}^{ref}(t)$, $S_{i+1,j}^{ref}(t)$, $S_{i,j+1}^{ref}(t)$, et $S_{i+1,j+1}^{ref}(t)$ sont chacune égale à $(d_{px})^2$. On remarque donc qu'un éclairement uniforme des pixels de détection par le signal de référence $s^{ref}(t)$ se traduit par une intensité de la composante alternative $AC_{ij}^{het}(t)$ du signal hétérodyne qui n'est pas optimale, dans la mesure où la distribution spatiale $S_{ij}^{ref}(t)$ est uniforme et ne tient pas compte de la distribution spatiale $S_{ij}^{or}(t)$ des grains de speckle. Cela impacte donc également l'intensité $I_{ij}^{het}(t)$, mais également le rapport signal sur bruit $SNR_{ij}^{het}(t)$, qui peut être défini comme $AC_{ij}^{het}(t) / \sqrt{( AC_{ij}^{het}(t) + DC_{ij}^{het}(t) )}$. En effet, il apparaît qu'une partie du signal de référence est involontairement utilisée pour amplifier des zones d'ombres du signal objet rétrodiffusé.

Aussi, dans le cadre de l'invention, on cherche à modifier la distribution spatiale d'intensité $I_{ij}^{ref}(t)$ du signal de référence, en tenant compte de la distribution spatiale d'intensité $I_{ij}^{or}(t)$ du signal objet rétrodiffusé, pour optimiser la distribution spatiale d'un paramètre d'intérêt représentatif du signal hétérodyne, par exemple son intensité (composante alternative et composante continue), l'intensité de sa composante alternative seule, voire le rapport signal sur bruit.

La modification de la distribution spatiale d'intensité $I_{ij}^{ref}(t)$ du signal de référence va alors se traduire par une formation de zones brillantes entourées de zones sombres, dont la disposition et la forme dépendent de la distribution spatiale d'intensité $I_{ij}^{or}(t)$ du signal objet rétrodiffusé. Cette « figure de speckle » équivalente du signal de référence est donc corrélée à la figure de speckle effective du signal objet rétrodiffusé. Elle peut également être corrélée aux variations spatiales de réflectivité de la scène éclairée. Ainsi, la surface éclairée $S_{ij}^{ref}(t)$ par les zones brillantes du signal de référence peut être sensiblement égale à la surface éclairée $S_{ij}^{or}(t)$ par les grains de speckle signal objet rétrodiffusé, et être au moins en partie superposées. La formation de ces zones brillantes, par la diminution des surfaces éclairées $S_{ij}^{ref}(t)$, pour tout ou partie des pixels de détection, permet donc d'optimiser la distribution spatiale du paramètre d'intérêt choisi.

Pour cela, le système imageur 1 selon l'invention comporte un dispositif de correction de phase 60, comportant :

- un modulateur spatial de phase 61 (SLM, pour *Spatial Light Modulator* en anglais), disposé sur le trajet du signal de référence en amont du dispositif optique d'imagerie 40, et adapté à appliquer au signal de référence une distribution spatiale de phase dite corrigée $\phi_{mn}^{ref}(t)$ ;
- une unité de calcul 62, connectée au photodétecteur et au modulateur spatial de phase 61, et adaptée à :

- déterminer une distribution spatiale de phase corrigée $\phi_{mn}^{ref,opt}(t_i)$ optimale à appliquer au signal de référence par le modulateur spatial de phase 61,
- en fonction d'une première distribution spatiale représentative d'une distribution spatiale d'intensité $I_{ij}^{or}(t_i)$ du signal objet rétrodiffusé dans le plan de réception, détectée par le photodétecteur matriciel 50,
- de sorte que le signal de référence présente une distribution spatiale d'intensité dite corrigée $I_{ij}^{ref,opt}(t_i)$ dans le plan de réception optimisant une distribution spatiale d'un paramètre d'intérêt représentatif du signal hétérodyne, ce paramètre d'intérêt étant choisi parmi l'intensité $I_{ij}^{het}(t_i)$ du signal hétérodyne (composantes continue et alternative), une intensité de la seule composante alternative $AC_{ij}^{het}(t_i)$, ou d'un rapport signal sur bruit $SNR_{ij}^{het}(t_i)$.

Autrement dit, on détermine une première distribution spatiale qui tient compte de celle du signal objet rétrodiffusé dans le plan de réception. Il peut s'agir de la distribution spatiale d'intensité $I_{ij}^{or}(t)$ du signal objet rétrodiffusé elle-même ou la distribution spatiale d'intensité $I_{ij}^{het}(t)$ du signal hétérodyne (dans le cas où on ne détecte pas le signal objet rétrodiffusé uniquement). Il peut également s'agir de la distribution spatiale de la composante alternative $AC_{ij}(t_i)$ ou de celle du rapport signal sur bruit $SNR_{ij}(t_i)$, voire encore celle de la fréquence de battement $f_b$. Ainsi, cette première distribution spatiale tient compte de la figure de speckle du signal objet rétrodiffusé.

Ensuite, on cherche à optimiser la distribution spatiale d'un paramètre d'intérêt qui est relatif du signal hétérodyne. Il peut ainsi s'agir de l'intensité du signal hétérodyne (composante continue et composante alternative), l'intensité de la composante alternative du signal hétérodyne, voire le rapport signal sur bruit.

Pour cela, on modifie la distribution spatiale de phase du signal de référence, qui passe ainsi d'une distribution spatiale initiale (par ex. uniforme) à une distribution spatiale corrigée (non uniforme), en fonction de la première distribution spatiale d'intensité (celle qui tient compte de la figure de speckle du signal objet rétrodiffusé), pour optimiser la distribution spatiale du paramètre d'intérêt. Cela peut ainsi se traduire par le fait que la distribution spatiale d'intensité du signal de référence tend vers celle de la figure de speckle du signal objet rétrodiffusé, en particulier lorsque le paramètre d'intérêt est l'intensité du signal hétérodyne (composantes continue et alternative). Autrement dit, le signal de référence va présenter des zones brillantes, dont la répartition géométrique est corrélée à celle des grains de speckle du signal objet rétrodiffusé. La distribution spatiale du paramètre d'intérêt est alors optimisée, ce qui améliore les performances du système imageur 1.

Les figures 3A et 3B sont des vues schématiques et partielles d'un système imageur 1 selon différents modes de réalisation, dans lesquels il comporte un tel dispositif de correction de phase 60, en configuration en optique en espace libre (fig.3A) et en configuration en optique guidée (fig.3B).

La fig.3A décrit un système imageur 1 selon un mode de réalisation, en configuration en optique en espace libre. Il se distingue de celui décrit sur la fig.1A essentiellement en ce qu'il comporte un modulateur spatial de phase 61 disposé ici sur le trajet du signal de référence entre le cube séparateur 31 et le cube combineur 34, et une unité de calcul 62 connectée au photodétecteur matriciel 50 d'une part et au modulateur spatial de phase 61 d'autre part. Dans cet exemple, le modulateur spatial de phase 61 est distinct du diffuseur 32 et est disposé en aval de ce dernier. En variante, il peut être situé en amont du diffuseur 32, voire être accolé ou confondu avec ce dernier. De préférence, comme décrit en détail par la suite, le modulateur spatial de phase 61 est situé dans un plan conjugué à un plan intermédiaire, lequel est situé dans une zone centrale définie par les rayons de bord de champ de pleine lumière du signal objet rétrodiffusé, pour former une source lumineuse équivalente 36 du signal de référence (cf. fig.7A à 7D). Cela permet d'améliorer la superposition du front d'onde du signal de référence avec celui du signal objet rétrodiffusé. On limite ainsi la génération de franges d'interférence entre ces deux signaux incidents, ces franges étant susceptibles de dégrader la détection du signal hétérodyne par les pixels de détection.

Le modulateur spatial de phase 61 peut être un modulateur transmissif à cristaux liquides. Il peut comporter une matrice de pixels de modulation d'indices m,n. Le nombre de pixels de modulation peut être inférieur ou égal au dixième du nombre de pixels de détection. Il peut ainsi s'agir d'un modulateur SLM à commande électrique (ESLM, pour *Electrically Spatial Light Modulator,* en anglais), dans lequel les cristaux liquides sont disposés entre deux feuilles d'un matériau transparent. Les pixels de modulation sont commandés par des éléments microélectroniques transparents, par exemple des transistors en film mince (TFT, pour *Thin Film Transistor,* en anglais).

L'unité de calcul 62 est connectée au photodétecteur matriciel 50 et au modulateur spatial de phase 61. Elle comporte un processeur programmable apte à exécuter des instructions enregistrées sur un support d'enregistrement d'informations. Elle comporte en outre une mémoire contenant les instructions nécessaires pour la mise en oeuvre de la détermination de la distribution spatiale de phase corrigée $\phi_{mn}^{ref}$ à appliquer au signal de référence pour modifier sa distribution spatiale d'intensité $I_{ij}^{ref}$ dans le plan de détection, et par conséquent optimiser la distribution spatiale du paramètre d'intérêt représentatif du signal hétérodyne. La mémoire est également adaptée à stocker les informations calculées.

Les figures 6A et 6B illustrent deux exemples d'un procédé de détermination d'une cartographie de distance de la scène par un système imageur 1 selon un mode de réalisation, et sont décrites plus loin.

La fig.3B décrit un système imageur 1 selon un autre mode de réalisation, en configuration en optique guidée. Il se distingue de celui décrit sur la fig.1B essentiellement en ce que la première matrice 22 de réseaux de diffraction, le modulateur spatial de phase 61, et le photodétecteur matriciel 50 sont réalisés dans ou sur un même substrat fonctionnalisé 2 réalisé à base d'un matériau semiconducteur, par exemple à base de silicium. Le dispositif optique de transmission 30 ainsi que le dispositif optique d'imagerie 40 comportent toutefois des éléments optiques en espace libre. Le photodétecteur matriciel 50 peut ainsi être un photodétecteur réalisé dans le substrat fonctionnalisé 2, comme l'illustre la fig.3B. Il s'agit ici d'une représentation qui est simplifiée pour privilégier la clarté des figures : en effet, les guides d'onde présentent habituellement une épaisseur très fine, de l'ordre de quelques centaines de nanomètres, alors que les photodiodes sont réalisées dans une couche semiconductrice d'une épaisseur de l'ordre de quelques microns. En variante, le photodétecteur matriciel 50 peut être réalisé à partir d'un substrat différent du substrat 2, puis être reporté sur ce dernier. En variante encore, il peut évidemment être réalisé dans un substrat fonctionnalisé distinct et séparé du substrat 2.

La source optique 10 émet le signal primaire dans le guide d'onde du substrat fonctionnalisé 2. Celui-ci se propage jusqu'à la première matrice 22 de réseaux de diffraction, qui assurent la projection d'une partie du signal primaire en direction du diffuseur 21. Une autre partie du signal primaire est transmise jusqu'au modulateur spatial de phase 61. Celui-ci peut être formé par un ensemble de réseaux de projection associés chacun à un déphaseur. Le signal de référence est alors extrait hors du substrat fonctionnalisé 2 en direction d'un miroir de renvoi 37, qui réoriente le signal de référence vers une lentille 33 puis vers le cube combineur 34. Le signal de référence et le signal objet rétrodiffusé sont ensuite transmis par le dispositif optique d'imagerie 40 en direction d'une matrice de photodiodes réalisée sur le même substrat fonctionnalisé 2. Le photodétecteur matriciel 50 est connecté à l'unité de calcul 62, laquelle est également connectée au modulateur spatial de phase 61.

La figure 4A est une vue détaillée d'un exemple de réalisation d'un tel substrat fonctionnalisé 2 du système imageur 1 de la fig.3B. Il est représenté en coupe longitudinale et en vue de dessus. Comme l'illustre la vue de dessus, le dispositif optique de projection 20 comporte le guide d'onde dans lequel se propage le signal primaire. Un diviseur assure la répartition du signal primaire dans une pluralité de bras, qui comportent chacun plusieurs réseaux de diffraction assurant la projection du signal objet en direction de la scène (par exemple, via au moins une lentille de mise en forme, comme illustré sur la fig.4A).

Un bras complémentaire assure la transmission d'une partie du signal primaire en direction du modulateur spatial de phase 61. La figure 4B illustre un exemple d'un tel modulateur 61 en optique guidée. Il peut être formé d'une pluralité de bras, qui comporte chacun plusieurs réseaux de diffraction 63. Ces derniers assurent la projection du signal de référence en direction d'éléments optiques en espace libre du dispositif optique de transmission 30. A chaque réseau de diffraction 63 est associé un déphaseur optique élémentaire 64. Ce dernier est classiquement à effet électro-réfractif ou à effet thermo-optique. Dans les deux cas, la variation de la phase est obtenue par une variation de l'indice de réfraction du matériau formant le coeur du guide d'onde considéré. Cette modification de l'indice de réfraction peut être obtenue par modification de la densité en porteurs libres dans le cas du déphaseur électro-réfractif, ou par modification de la température appliquée au bras dans le cas du déphaseur thermo-optique.

Les figures 5A et 5B illustrent, de manière schématique, des exemples des champs optiques (distributions spatiales d'intensité) du signal de référence $s^{ref}(t)$ et du signal objet rétrodiffusé $s^{or}(t)$, au niveau de quelques pixels de détection du photodétecteur matriciel 50, dans le cas d'un système imageur 1 selon un mode de réalisation. Le modulateur spatial de phase 61 applique ici au signal de référence une distribution spatiale de phase corrigée $\phi_{mn}^{ref,opt}(t)$ optimale, de sorte que la distribution spatiale d'intensité $I_{ij}^{ref}(t)$ du signal de référence soit corrélée à celle du signal objet rétrodiffusé, optimisant ainsi la distribution spatiale du paramètre d'intérêt représentatif du signal hétérodyne.

Comme pour les fig.2A et 2B, le signal objet rétrodiffusé présente une figure de speckle, dont les grains de speckle présentent une dimension latérale $d_{sp}$ de l'ordre de $2\times\lambda\times NO$ dans le plan de réception. Ils peuvent avoir une taille $d_{sp}$ supérieure à la taille $d_{px}$ des pixels de détection, ou avoir une taille inférieure ou égale. Chaque pixel de détection $P_{ij}$ est éclairé sur une surface $S_{ij}^{or}(t)$ par le signal objet rétrodiffusé.

En revanche, le signal de référence ne présente plus une distribution spatiale d'intensité $I_{ij}^{ref}(t)$ uniforme, comme dans les fig.2A et 2B, mais une distribution spatiale d'intensité non uniforme se traduisant par la présence de zones brillantes entourées de zones sombres. Cette « figure de speckle » équivalente du signal de référence provient de la distribution spatiale de phase corrigée $\phi_{mn}^{ref,opt}(t)$ optimale appliquée par le modulateur spatial de phase 61, qui tient compte de la distribution spatiale d'intensité $I_{ij}^{or}(t)$ du signal objet rétrodiffusé. Ainsi, les zones brillantes du signal de référence présentent une répartition géométrique plus ou moins similaire à celle des grains de speckle : leur taille $d_{zb}^{ref}$ est de l'ordre de la taille $d_{sp}$ des grains de speckle, et d'autre part sont au moins en partie superposées aux grains de speckle.

Aussi, comme indiqué précédemment, la surface éclairée $S_{ij}^{ref}(t)$ par les zones brillantes du signal de référence est diminuée, ce qui contribue à augmenter

l'intensité $I_{ij}^{het}$ du signal hétérodyne (composante continue et composante alternative), à améliorer l'intensité $AC_{ij}^{het}(t)$ de la composante alternative, et à améliorer le rapport signal sur bruit $SNR_{ij}^{het}(t)$. Les performances du système imageur 1 sont donc améliorées.

La figure 6A est un organigramme illustrant des étapes d'un procédé de détermination d'une cartographie de distance $D_{ij}(t_i)$ de la scène par un système imageur 1 selon un mode de réalisation. Bien entendu, les différentes étapes sont dissociées dans un but de clarté, mais plusieurs d'entre elles sont effectuées de manière simultanée ou quasiment simultanée.

Le procédé de détermination est ici effectué sur la base d'une optimisation directe de la distribution spatiale d'intensité $I_{ij}^{ref}(t_i)$ du signal de référence, à partir d'une fonction de transfert H reliant la distribution spatiale de phase corrigée $\phi_{mn}^{ref}$ appliquée au signal de référence à la distribution spatiale d'intensité $I_{ij}^{ref}$ du signal de référence dans le plan de réception. De plus, dans le procédé de détermination de la fig.6A, le paramètre d'intérêt est l'intensité du signal hétérodyne, et on cherche à rendre la distribution spatiale d'intensité $I_{ij}^{ref}(t_i)$ du signal de référence semblable à la distribution spatiale d'intensité $I_{ij}^{or}(t_i)$ du signal objet rétrodiffusé. Ce procédé est particulièrement adapté au cas où les grains de speckle présentent une taille $d_{sp}$ supérieure à la taille $d_{px}$ des pixels de détection.

Lors d'une étape préalable 090, on détermine une fonction de transfert H telle que $I_{ij}^{ref} = H(\phi_{mn}^{ref})$. Cette étape peut être effectuée par simulation numérique ou par une étude paramétrique, et tient compte des éléments optiques des dispositifs optiques de transmission et d'imagerie. La fonction de transfert H est stockée en mémoire dans l'unité de calcul 62. Ainsi, la connaissance de cette fonction de transfert H permet de déterminer, à partir de la distribution spatiale de phase corrigée $\phi_{mn}^{ref}$ appliquée au signal de référence, la distribution spatiale d'intensité $I_{ij}^{ref}$ de ce dernier dans le plan de réception.

Lors de l'étape 100, on effectue la projection du signal objet s°(t) de manière à éclairer instantanément et de préférence uniformément la scène.

Les étapes suivantes sont effectuées de manière itérative à un instant de détermination $t_i$ incrémenté. A chaque instant de détermination $t_i$, le procédé détermine une cartographie de distance $D_{ij}(t_i)$. Puis l'instant de détermination $t_i$ passe à l'instant suivant $t_{i+1}$. A chaque instant de détermination $t_i$, est associée une phase d'optimisation de la distribution spatiale du paramètre d'intérêt, laquelle est effectuée en deux temps, notés k=0 et k=1. Les étapes 110 à 113 portent sur le premier temps de la phase d'optimisation (k=0), et les étapes 120 à 122 portent sur le deuxième temps (k=1).

Lors de l'étape 110, et simultanément à l'étape 100, on suspend la transmission du signal de référence $s^{ref}(t_{i,k=0})$, par exemple au moyen d'un obturateur. Aussi, l'intensité $I^{ref}(t_{i,k=0})$ du signal de référence transmis est nulle. L'étape 111 exprime le fait que le modulateur spatial de phase 61 reste inactif.

Lors d'une étape 112, le photodétecteur matriciel 50 reçoit et détecte un signal optique incident, à savoir le signal objet rétrodiffusé $s^{or}(t_i)$. Aussi, la distribution spatiale d'intensité $I_{ij}^{det}(t_{j,k=0})$ du signal détecté correspond à la distribution spatiale d'intensité $I_{ij}^{or}(t_{i,k=0})$ du signal objet rétrodiffusé. Celui-ci présente donc une figure de speckle. Cette distribution spatiale d'intensité $I_{ij}^{or}(t_{i,k=0})$ est transmise à l'unité de calcul 62 et stockée en mémoire.

Lors de l'étape 113, l'unité de calcul 62 détermine la distribution spatiale de phase corrigée $\phi_{mn}^{ref,opt}(t_i)$ optimale à appliquer au signal de référence de sorte que sa distribution spatiale d'intensité $I_{ij}^{ref}(t_{j,k=1})$ soit égale à la distribution spatiale d'intensité $I_{ij}^{or}(t_{i,k=0})$ détectée. Autrement dit, on calcule : $\phi_{mn}^{ref,opt}(t_i) = H^{-1}(I_{ij}^{or}(t_{i,k=0}))$.

On passe ensuite au second temps de la phase d'optimisation (k=1). Lors de l'étape 120, on autorise la transmission du signal de référence $s^{ref}(t_{i,k=1})$. Il se propage alors dans le dispositif optique de transmission 30 et le dispositif de correction de phase 60.

Lors de l'étape 121, le modulateur spatial de phase 61 applique au signal de référence la distribution spatiale de phase corrigée $\phi_{mn}^{ref,opt}(t_i)$ optimale, de sorte que le signal de référence présente alors, dans le plan de réception, la distribution spatiale d'intensité corrigée $I_{ij}^{ref,opt}(t_{i,k=1})$ optimale. Celle-ci est alors sensiblement égale à la distribution spatiale d'intensité $I_{ij}^{or}(t_{i,k=0})$ du signal objet rétrodiffusé (et donc de la figure de speckle). L'égalité porte ici essentiellement sur la répartition géométrique des zones brillantes et des zones sombres, le flux lumineux total (intégré sur toute la surface de la matrice des pixels de détection) du signal de référence peut être égal ou non à celui du signal objet rétrodiffusé.

Lors de l'étape 122, le photodétecteur matriciel 50 reçoit et détecte un signal optique incident, à savoir maintenant le signal objet rétrodiffusé et le signal de référence, qui forment le signal hétérodyne. Aussi, la distribution spatiale d'intensité $I_{ij}^{det}(t_{i,k=1})$ du signal détecté correspond à la distribution spatiale d'intensité $I_{ij}^{het}(t_{i,k=1})$ du signal hétérodyne. Celui-ci dépend de la distribution spatiale d'intensité $I_{ij}^{or}(t_{i,k=1})$ du signal objet rétrodiffusé et de la distribution spatiale d'intensité $I_{ij}^{ref,opt}(t_{i,k=1})$ du signal de référence.

Aussi, le signal de référence présente une « figure de speckle » qui est corrélée à celle du signal objet rétrodiffusé. Le flux lumineux total reste constant, mais il est réparti dans des zones brillantes qui se superposent sensiblement aux grains de speckle. Les surfaces éclairées $s_{ij}^{ref,opt}(t_{i,k=1})$ par les zones brillantes du signal de référence sont donc diminuées par rapport à un éclairement uniforme. Aussi, cet éclairement non uniforme par le signal de référence, et corrélé à la figure de speckle du signal objet rétrodiffusé, améliore à la fois l'intensité du signal hétérodyne (composantes continue et alternative), l'intensité de la composante alternative seule du signal hétérodyne (signal utile), ainsi que son rapport signal sur bruit. Les performances du système imageur 1 sont donc améliorées. On considère évidemment que le photodétecteur matriciel ne sature pas lors de la réception des signaux optiques incidents.

Lors de l'étape 130, le système imageur 1 calcule la fréquence de battement $f_b$ du signal hétérodyne en chaque pixel de détection, et détermine la cartographie de distance $D_{ij}(t_i)$ de la scène. Ensuite, l'instant de détermination $t_i$ passe à l'instant suivant $t_{i+1}$. Le procédé de détermination peut ensuite se poursuivre en reprenant l'étape 110, en particulier lorsque la scène est dynamique.

La figure 6B est un organigramme illustrant des étapes d'un autre procédé de détermination d'une cartographie de distance $D_{ij}(t_i)$ de la scène par un système imageur 1 selon un mode de réalisation. Ici également, les différentes étapes sont dissociées dans un but de clarté, mais plusieurs d'entre elles sont effectuées de manière simultanée ou quasiment simultanée.

Le procédé de détermination est ici effectué sur la base d'une modification itérative de la distribution spatiale d'intensité $I_{ij}^{ref}(t_i)$ du signal de référence, optimisant ainsi la distribution spatiale du paramètre d'intérêt. Celui-ci peut être l'intensité du signal hétérodyne (composantes continue et alternative), l'intensité de la seule composante alternative du signal hétérodyne, voire le rapport signal sur bruit. Ce procédé peut être utilisé dans le cas où les grains de speckle présentent une taille $d_{sp}$ supérieure à la taille $d_{px}$ des pixels de détection, comme dans celui où la taille $d_{sp}$ est inférieure à $d_{px}$.

Lors de l'étape 200, on effectue la projection du signal objet s°(t) de manière à éclairer simultanément et de préférence uniformément la scène.

Lors de l'étape 210, simultanément à l'étape 200, on transmet le signal de référence $s^{ref}(t)$. Il se propage alors dans le dispositif optique de transmission 30 et le dispositif de correction de phase 60, en direction du photodétecteur matriciel 50 (en passant par le dispositif optique d'imagerie 40).

Les étapes suivantes 220 à 224 font partie de la phase d'optimisation de la distribution spatiale du paramètre d'intérêt. Elles sont effectuées de manière itérative, avec un indicateur qui passe d'une valeur initiale k=0 à une valeur finale kf. Cette optimisation itérative est effectuée pour chaque instant de détermination $t_i$. Lorsqu'elle est terminée, l'instant de détermination $t_i$ passe à l'instant suivant $t_{i+1}$.

Lors de l'étape 220, le modulateur spatial de phase 61 applique une distribution spatiale de phase corrigée $\phi_{mn}^{ref}(t_{i,k})$ au signal de référence, de sorte que ce dernier présente la distribution spatiale d'intensité $I_{ij}^{ref}(t_{i,k})$ dans le plan de réception. A l'itération initiale k=0, la distribution spatiale de phase corrigée $\phi_{mn}^{ref}(t_{i,k})$ peut être uniforme, ou peut comporter des variations aléatoires de phase, voire être égale à la distribution spatiale de phase optimale $\phi_{mn}^{ref}(t_{i-1,kf})$ déterminée à l'instant $t_{i-1}$ précédent.

Lors de l'étape 221, le photodétecteur matriciel 50 reçoit et détecte un signal optique incident, à savoir le signal objet rétrodiffusé et le signal de référence, qui forment le signal hétérodyne, lequel présente alors la distribution spatiale d'intensité $I_{ij}^{het}(t_{i,k})$. Celui-ci dépend de la distribution spatiale d'intensité $I_{ij}^{or}(t_i)$ du signal objet rétrodiffusé et de la distribution spatiale d'intensité corrigée $I_{ij}^{ref}(t_{i,k})$ du signal de référence. Notons que le signal objet rétrodiffusé peut présenter une distribution spatiale d'intensité $I_{ij}^{or}(t_i)$ inchangée au cours des différentes itérations de la phase d'optimisation (lorsque la scène est statique) ou peut présenter de petites variations.

Lors de l'étape 222, on détermine la distribution spatiale du paramètre d'intérêt. Celui-ci peut être l'intensité du signal hétérodyne (composantes continue et alternative), l'intensité de la composante alternative seule du signal hétérodyne (signal utile), ou le rapport signal sur bruit. Dans cet exemple, il s'agit du rapport signal sur bruit $SNR_{ij}^{het}(t_{i,k})$.

Lors de l'étape 223, on détermine un critère d'optimisation $C(t_{i,k})$. Il peut s'agir de l'indicateur k lorsque l'optimisation repose sur un nombre prédéfini d'itérations : on comparera alors la valeur de l'indicateur à une valeur kf prédéfinie (lors de l'étape 224), et la phase d'optimisation est réitérée lorsque cette valeur n'est pas atteinte. Il peut s'agir d'un écart local entre la distribution spatiale $SNR_{ij}^{het}(t_{j,k})$ à l'itération k et la distribution spatiale $SNR_{ij}^{het}(t_{i,k})$ à l'itération précédente k-1. Cet écart peut être la somme quadratique des écarts locaux, le maximum des écarts locaux (comme illustré sur la fig.6B), entre autres.

Lors de l'étape 224, on compare la valeur du critère d'optimisation $C(t_{i,k})$ avec une valeur prédéfinie $C_{th}$. La boucle d'optimisation est réitérée (k passe alors à k+1), et les étapes 220 à 224 sont effectuées à nouveau, jusqu'à ce que le critère d'optimisation atteigne la valeur seuil prédéfinie.

Notons que, lors de l'étape 220, la distribution spatiale de phase $\phi_{mn}^{ref}(t_{i,k+1})$ à l'itération k+1 est déterminée par l'unité de calcul 62 à partir du critère d'optimisation déterminé à l'itération k, et plus précisément à partir de la distribution spatiale du critère d'optimisation $C_{ij}(t_{i,k})$ (ici à partir de la différence $SNR_{ij}^{het}(t_{i,k})$ - $SNR_{ij}^{het}(t_{i,k-1})$). L'unité de calcul 62 peut ainsi faire varier la phase locale en utilisant un algorithme d'optimisation (descente de gradient...) jusqu'à ce que le critère d'optimisation atteigne la valeur seuil prédéfinie.

Enfin, lors de l'étape 230, le système imageur 1 calcule la fréquence de battement $f_b$ du signal hétérodyne en chaque pixel de détection, et détermine la cartographie de distance $D_{ij}(t_i)$ de la scène. Ensuite, l'instant de détermination $t_i$ passe à l'instant suivant $t_{i+1}$. Le procédé de détermination se poursuit en reprenant l'étape 220.

Notons que ces deux exemples de procédé de détermination illustrés sur les fig.6A et 6B sont donnés à titre illustratif. D'autres exemples de procédé peuvent être mis en oeuvre. Ainsi, il est possible d'effectuer une optimisation itérative similaire à celle illustrée sur la fig.6B dans le cadre du procédé de la fig.6A : ainsi, la distribu-

tion spatiale d'intensité $I_{ij}^{ref}(t_{i,k})$ du signal de référence peut tendre vers la distribution spatiale d'intensité $I_{ij}^{or}(t_{i,k})$ du signal objet rétrodiffusé via une optimisation itérative.

Les figures 7A à 7D illustrent une configuration avantageuse du système imageur 1, dans laquelle on forme une source lumineuse équivalente 36 du signal de référence dans un plan intermédiaire situé au niveau ou à proximité du diaphragme d'ouverture. Sur ces figures sont représentés le plan de réception du photodétecteur matriciel 50, le dispositif optique d'imagerie 40 (lentilles 41, 43 et diaphragme d'ouverture 42), et la source lumineuse équivalente 36 du signal de référence.

Aussi, le dispositif optique de transmission 30, et le cas échéant le dispositif optique d'imagerie 40, réalise l'image du modulateur spatial de phase 61 et/ou du diffuseur dans le plan intermédiaire. Le modulateur spatial de phase 61 et/ou le diffuseur 32 sont donc situés dans un plan qui est conjugué au plan intermédiaire. Cette configuration est similaire à celle décrite dans la demande de brevet français FR2000408 déposée le 16 janvier 2020. Le positionnement longitudinal de la source lumineuse équivalente 36 suivant l'axe optique et sa dimension latérale peuvent se définir par des éléments optiques de mise en forme. L'angle d'émission équivalent peut se définir par le diffuseur 32 du dispositif optique de transmission 30 (fig.3A) ou par la matrice de réseaux 61 (fig.3B).

Le front d'onde du signal de référence incident en chaque pixel de détection est alors rendu plus proche, voire identique à celui du signal objet rétrodiffusé, en termes de forme et de direction principale. On limite ainsi la génération de franges d'interférence entre ces deux signaux optiques, ces franges d'interférence étant susceptibles d'entraîner une dégradation de la qualité du signal hétérodyne détecté.

On définit l'angle de champ FOV *(Field Of View,* en anglais) du dispositif optique d'imagerie 40 comme étant l'angle dans lequel le photodétecteur matriciel 50 est sensible au signal objet rétrodiffusé. Il est défini ici comme étant l'angle, mesuré au centre de la pupille de sortie, entre deux rayons incidents du signal objet rétrodiffusé passant par ce même point O et arrivant sur deux pixels d'extrémité opposés l'un à l'autre vis-à-vis de l'axe optique. Un pixel d'extrémité est un pixel de détection situé en bordure de la matrice de détection. Par ailleurs, la pupille de sortie est l'image du diaphragme d'ouverture par les lentilles situées en aval de ce dernier.

Ensuite, comme l'illustre plus précisément la fig.7B, on définit une zone centrale Zc des rayons de bord de champ de pleine lumière *(unvignetted field,* en anglais, selon le terme utilisé dans l'ouvrage de J. E. Greivenkamp intitulé *Field Guide to Geometrical Optics,* SPIE Press, Bellingham, WA (2004)). Elle est définie ici comme étant la zone délimitée latéralement par les rayons de bord de champ de pleine lumière, c'est-à-dire par les rayons du signal objet rétrodiffusé passant au niveau le contour du diaphragme d'ouverture et arrivant sur des pixels d'extrémité de la matrice de pixels de détection. Ces pixels d'extrémité sont ceux situés sur la bordure de la matrice de pixels de détection, c'est-à-dire les pixels les plus éloignés de l'axe optique. Cette zone centrale prend la forme de deux cônes partageant la même base délimitée par le contour du diaphragme d'ouverture. Les sommets des cônes sont M et M', situés sur l'axe optique, respectivement en amont et en aval du diaphragme d'ouverture. Ils sont les points d'extrémités longitudinales de la zone centrale.

La fig.7A illustre de manière détaillée et partielle, en coupe longitudinale, le dispositif optique d'imagerie 40 et le plan de réception du système imageur 1 selon une variante de réalisation, dans laquelle la source lumineuse équivalente 36 du signal de référence, formée par le dispositif optique de transmission 30, est située dans la zone centrale Zc, ici en amont du diaphragme d'ouverture. La zone centrale Zc est illustrée plus précisément sur la fig.7B.

On représente, pour les deux pixels d'extrémité $Px_a$ et $Px_b$, d'une part les rayons de bord de champ de pleine lumière du signal objet rétrodiffusé (en traits pleins), et d'autre part les rayons provenant de deux extrémités opposées de la source lumineuse équivalente 36 et reçus par chacun des pixels d'extrémité (en traits pointillés).

Ainsi, pour ce qui concerne le pixel d'extrémité $Px_a$, il reçoit ici les deux rayons $R_a^{or1}$, $R_a^{or2}$ du signal objet rétrodiffusé passant par la bordure du diaphragme d'ouverture (dans le plan longitudinal), ainsi que les deux rayons $R_a^{ref1}$, $R_a^{ref2}$ du signal de référence provenant de la bordure de la source lumineuse équivalente 36. Les rayons $R_a^{or1}$ et $R_a^{ref1}$ passent tous les deux par la même bordure du diaphragme d'ouverture et sont donc superposés. En ce qui concerne les rayons reçus par le deuxième pixel d'extrémité $Px_b$, on ne les détaille pas dans la mesure où la situation est similaire.

Le dispositif optique de transmission 30 est adapté de sorte que la source lumineuse équivalente 36 présente, en chacun de ses points, un cône de divergence (ou d'émission équivalente) qui couvre toute la matrice de pixels de détection. Aussi, chacun des pixels de détection reçoit effectivement le signal de référence en plus du signal objet rétrodiffusé. Le signal hétérodyne se forme donc bien en chaque pixel de détection.

La source lumineuse équivalente 36 étant positionnée entre les points M et M', et présentant une dimension latérale au moins égale à celle de la zone centrale, le cône de réception du signal de référence est sensiblement identique au cône de réception du signal objet rétrodiffusé, ceci en chaque pixel de détection.

La fig.7B est identique à la fig.7A à ceci près que les rayons du signal de référence $R_a^{ref}$, $R_b^{ref}$ provenant de la source lumineuse équivalente 36 ne sont pas représentés. On met ici en évidence la zone centrale Zc définie latéralement et longitudinalement par les rayons de bord de champ de pleine lumière $R_a^{or1}$, $R_a^{or2}$ et $R_b^{or1}$, $R_b^{or2}$ (ici dans un plan longitudinal). Le point M en amont du diaphragme d'ouverture est situé sur l'axe optique et est à l'intersection des rayons $R_a^{or1}$ et $R_b^{or2}$, alors que le point M' en aval du diaphragme d'ouverture est situé sur l'axe optique et est à l'intersection des rayons $R_a^{or2}$ et $R_b^{or1}$. La dimension latérale la plus importante de la zone centrale Zc est située dans le plan du diaphragme d'ouverture.

La fig.7C est identique à la fig.7A, à ceci près que l'on considère uniquement les rayons reçus par le pixel de détection $Px_a$, à savoir les rayons $R_a^{or1}$ et $R_a^{or2}$ du signal objet rétrodiffusé et les rayons $R_a^{ref1}$ et $R_a^{ref2}$ du signal de référence (la référence $R_a^{ref1}$ n'est pas indiquée dans la mesure où ce rayon est confondu avec le rayon $R_a^{or1}$). Chaque point de cette source lumineuse équivalente 36 éclaire au moins tout le plan de réception, et ici uniquement le plan de réception. Ainsi, un même pixel de détection reçoit, en plus du signal objet rétrodiffusé, le signal de référence provenant de tous les points de la source lumineuse équivalente 36.

On met ici en évidence le fait que l'on a réduit la différence entre les fronts d'onde de ces signaux optiques par rapport au cas où la source équivalente 36 serait située hors de la zone centrale Zc : on a réduit en particulier la valeur de l'angle d'écart $\theta_a$ entre les directions principales de ces fronts d'onde qui sont incidents sur le pixel de détection $Px_a$. Une direction principale est définie comme étant la direction moyenne du cône angulaire du faisceau incident (signal de référence ou signal objet rétrodiffusé) au niveau du pixel de détection considéré, ici au niveau du pixel d'extrémité $Px_a$.

Ainsi, le fait de former une source lumineuse équivalente 36 du signal de référence dans la zone centrale Zc permet de réduire l'angle d'écart $\theta$ au niveau du pixel de détection considéré. On augmente ainsi la dimension des interfranges qui peuvent se former entre le signal objet rétrodiffusé et le signal de référence. La dimension des interfranges est, au premier ordre, de l'ordre de $\lambda/2\sin\theta$, où À est la longueur d'onde des signaux optiques incidents. Le fait d'avoir des cônes angulaires des signaux optiques (signal de référence et signal objet rétrodiffusé) incidents en chaque pixel de détection qui soient très similaires voire identiques entre eux permet également d'augmenter la dimension de l'interfrange.

On améliore ainsi l'intensité détectée du signal hétérodyne. En effet, un angle d'écart $\theta$ important entre les directions principales des fronts d'onde et/ou un écart entre les cônes angulaires des signaux optiques incidents conduit à réduire la taille des interfranges, qui peut alors être de l'ordre de la taille $d_{px}$ des pixels de détection, voire moins. Aussi, durant le temps d'acquisition des photodiodes, le fait que plusieurs franges d'interférence (zones brillantes et zones sombres) soient présentes à l'échelle de chaque pixel de détection peut se traduire par une dégradation de la qualité de la détection du signal hétérodyne.

Il est particulièrement avantageux que la source lumineuse équivalente 36 soit située au plus près du diaphragme d'ouverture, et que sa largeur soit au moins égale et de préférence sensiblement égale à celle de la zone centrale, donc ici à celle de l'orifice du diaphragme d'ouverture.

A ce titre, la fig.7D illustre une variante de la configuration illustrée sur la fig.7C, dans laquelle la source lumineuse équivalente 36 est située ici sensiblement dans le plan du diaphragme d'ouverture 42. On remarque que, au niveau du pixel de détection $Px_a$, les rayons d'extrémité $R_a^{or1}$ et $R_a^{ref1}$ sont confondues, comme le sont les rayons $R_a^{or2}$ et $R_a^{ref2}$. Il en est de même pour les rayons qui définissent les directions principales de ces signaux. L'angle d'écart $\theta$ est alors sensiblement nul. De plus, comme la source lumineuse équivalente 36 couvre sensiblement toute la surface du diaphragme d'ouverture 42, les cônes angulaires des deux signaux optiques incidents en chaque pixel de détection sont sensiblement égaux. Aussi, les fronts d'onde du signal objet rétrodiffusé et du signal de référence sont sensiblement identiques. L'interfrange présente alors une dimension qui peut dépasser les dimensions de la matrice de détection, de sorte que l'on peut considérer qu'il n'y a alors pas de franges d'interférence entre ces signaux susceptibles de dégrader la qualité du signal hétérodyne détecté par chaque pixel de détection. On parle alors de franges d'interférence en teinte plate. Les performances du système imageur 1 sont alors encore améliorées.

Des modes de réalisation particuliers viennent d'être décrits. Différentes variantes et modifications apparaîtront à l'homme du métier.

## Revendications

**1.** Système imageur (1) LIDAR de type FMCW, comportant :

◦ une source (10) de lumière cohérente, adaptée à émettre un signal primaire continu modulé en fréquence ;
◦ un dispositif optique de projection (20) d'une partie du signal primaire, dite signal objet, sur une scène à éclairer de manière instantanée ;
◦ un dispositif optique de transmission (30) d'une partie du signal primaire, dite signal de référence, vers un dispositif optique d'imagerie (40) ;
◦ le dispositif optique d'imagerie (40), étant adapté à recevoir une partie du signal objet rétrodiffusée par la scène, dite signal objet rétrodiffusé, présentant une figure de speckle ;
◦ un photodétecteur matriciel (50), comportant une matrice de pixels de détection ($P_{ij}$), chacun destiné à recevoir, dans un plan de réception conjugué à la scène par le système optique d'imagerie (40), le signal objet rétrodiffusé et le signal de référence qui forment un signal hétérodyne présentant une fréquence dite de battement ($f_b$) représentative d'une distance (D) entre le photodétecteur matriciel (50) et la scène éclairée ;

◦ **caractérisé en ce qu'**il comporte un dispositif de correction de phase (60), comportant :

• un modulateur spatial de phase (61), disposé sur le trajet du signal de référence en amont du dispositif optique d'imagerie (40), adapté à appliquer au signal de référence une distribution spatiale de phase dite corrigée ($\phi_{mn}^{ref}(t_i)$) ;
• une unité de calcul (62), connectée au photodétecteur matriciel (50) et au modulateur spatial de phase (61), et adaptée à :

- déterminer une distribution spatiale de phase corrigée ($\phi_{mn}^{ref,opt}(t_i)$) optimale à appliquer au signal de référence par le modulateur spatial de phase (61),
- en fonction d'une première distribution spatiale représentative d'une distribution spatiale d'intensité ($I_{ij}^{or}(t_i)$) du signal objet rétrodiffusé dans le plan de réception, détectée par le photodétecteur matriciel (50),
- de sorte que le signal de référence présente une distribution spatiale d'intensité dite corrigée ($I_{ij}^{ref,opt}(t_i)$) dans le plan de réception optimisant une distribution spatiale d'un paramètre d'intérêt représentatif du signal hétérodyne, choisi parmi l'intensité ($I_{ij}^{het}(t_i)$) du signal hétérodyne, une intensité d'une composante alternative ($AC_{jj}^{het}(t_i)$) du signal hétérodyne, ou d'un rapport signal sur bruit ($SNR_{ij}^{het}(t_i)$).

2. Système imageur (1) selon la revendication 1, dans lequel les pixels de détection présentent une dimension latérale ($d_{px}$) inférieure à $2\times\lambda\times NO$, où À est la longueur d'onde du signal objet rétrodiffusé et où NO est un nombre d'ouverture du dispositif optique d'imagerie (40).

3. Système imageur (1) selon la revendication 1 ou 2, dans lequel les dispositifs optiques de projection (20) et de transmission (30) comportent des éléments optiques en espace libre.

4. Système imageur (1) selon la revendication 3, dans lequel le modulateur spatial de phase (61) est un modulateur de phase à cristaux liquide.

5. Système imageur (1) selon la revendication 1 ou 2, dans lequel le dispositif optique de projection (20) comporte des éléments optiques en optique guidée réalisés dans un substrat fonctionnalisé (2), dont une matrice de réseaux de diffraction (22) adaptée à recevoir le signal primaire par un guide d'onde et à projeter le signal objet hors du substrat fonctionnalisé (2).

6. Système imageur (1) selon la revendication 5, dans lequel le dispositif de correction de phase (60) comporte des éléments optiques en optique guidée réalisés dans ledit substrat fonctionnalisé (2), le modulateur spatial de phase comportant une matrice de réseaux de diffraction (61) adaptée à recevoir le signal de référence par un guide d'onde et à le projeter hors du substrat fonctionnalisé (2) après lui avoir appliqué la distribution spatiale de phase corrigée ($\phi_{mn}^{ref}(t_i)$).

7. Système imageur (1) selon la revendication 5 ou 6, dans lequel le dispositif optique de transmission (30) comporte des éléments optiques en espace libre adaptés à transmettre le signal de référence projeté par le modulateur spatial de phase (61) en direction du dispositif optique d'imagerie (40).

8. Système imageur (1) selon l'une quelconque des revendications 5 à 7, dans lequel la matrice de pixels de détection est réalisée dans ou sur ledit substrat fonctionnalisé (2).

9. Système imageur (1) selon l'une quelconque des revendications 1 à 8, dans lequel les dispositifs optiques de transmission (30) et d'imagerie (40) sont adaptés à transmettre le signal de référence et le signal objet rétrodiffusé en direction du photodétecteur matriciel (50) suivant un même axe optique.

10. Système imageur (1) selon l'une quelconque des revendications 1 à 9, dans lequel :

◦ le dispositif optique d'imagerie (40) comporte au moins un élément optique en espace libre et un diaphragme d'ouverture, définissant ainsi, vis-à-vis du photodétecteur matriciel, un angle de champ, ainsi qu'une zone centrale (Zc) délimitée latéralement par des rayons du signal objet rétrodiffusé de bord de champ de pleine lumière qui se propagent jusqu'à des pixels de détection dit d'extrémité situés en bordure de la matrice de détection ;
◦ le dispositif optique de transmission (30) et le dispositif optique d'imagerie (40) sont adaptés à former une image du signal de référence dans un plan intermédiaire orthogonal à l'axe optique du dispositif optique d'imagerie (40), formant ainsi une source lumineuse équivalente (36) du signal de référence ;

• la source lumineuse équivalente (36) étant contenue dans la zone centrale (Zc) des rayons du signal objet rétrodiffusé de bord de champ de pleine lumière ;
• la source lumineuse équivalente (36) présentant en chaque point un angle d'émission du signal de référence au moins égal audit angle de champ du dispositif optique d'imagerie (40).

**11.** Système imageur (1) selon la revendication 10, dans lequel la source lumineuse équivalente (36) présente une dimension latérale au moins égale à celle de la zone centrale (Zc) des rayons du signal objet rétrodiffusé de bord de champ de pleine lumière.

**12.** Procédé de détermination d'une cartographie de distance de la scène par un système imageur (1) selon l'une quelconque des revendications précédentes, dans lequel le paramètre d'intérêt est l'intensité du signal hétérodyne, le procédé comportant les étapes suivantes :

◦ a/ projection, par le dispositif optique de projection (20), du signal objet vers la scène pour l'éclairer de manière instantanée ;
◦ b/ détection, par le photodétecteur matriciel (50), de la première distribution spatiale d'intensité d'un signal optique incident représentatif du signal objet rétrodiffusé ;
◦ c/ détermination, par l'unité de calcul (62), de la distribution spatiale de phase corrigée à appliquer au signal de référence par le modulateur spatial de phase (61) ;
◦ d/ application, par le modulateur spatial de phase (61), de la distribution spatiale de phase corrigée au signal de référence ;
◦ e/ détection, par le photodétecteur matriciel (50), d'une distribution spatiale d'intensité du signal hétérodyne ;
◦ f/ détermination, par l'unité de calcul (62), de la distribution spatiale du paramètre d'intérêt, à partir de la distribution spatiale d'intensité du signal hétérodyne détectée ;
◦ réitération, le cas échéant, des étapes c/ à f/ en modifiant la distribution spatiale de phase corrigée, jusqu'à ce qu'un critère de détermination fonction de la distribution spatiale du paramètre d'intérêt atteigne une valeur seuil prédéfinie ;
◦ g/ lorsque le critère de détermination atteint la valeur seuil prédéfinie, détermination de la cartographie de distance.

**13.** Procédé selon la revendication 12, dans lequel :

◦ lors de l'étape b/, suspension de la transmission du signal de référence, de sorte que le signal optique incident est le signal objet rétrodiffusé ;
◦ lors de l'étape c/, détermination de la distribution spatiale de phase corrigée, de sorte que la distribution spatiale d'intensité du signal de référence dans le plan de réception soit sensiblement égale à la distribution spatiale d'intensité du signal objet rétrodiffusé détectée, à partir d'une fonction de transfert prédéfinie exprimant la distribution spatiale d'intensité du signal de référence dans le plan de réception en fonction d'une distribution spatial de phase appliquée par le modulateur spatial de phase (61) ;
◦ lors de l'étape d/, la transmission du signal de référence n'est plus suspendue.

**14.** Procédé selon la revendication 12, dans lequel :

◦ lors de l'étape b/, le signal optique détecté est le signal hétérodyne ;
◦ les étapes c/ à f/ sont réitérées, la distribution spatiale de phase étant modifiée en fonction du critère d'optimisation à l'itération précédente, en fonction d'un algorithme d'optimisation prédéfini, jusqu'à ce que le critère d'optimisation atteigne la valeur seuil prédéfinie, optimisant ainsi la distribution spatiale du paramètre d'intérêt.

**Patentansprüche**

**1.** LIDAR-Bildgebersystem (1) des Typs FMCW, das aufweist:

o eine Quelle (10) kohärenten Lichts, die geeignet ist, ein frequenzmoduliertes kontinuierliches Primärsignal auszusenden;
o eine optische Projektionsvorrichtung (20) eines Teils des Primärsignals, Objektsignal genannt, auf eine augenblicklich zu beleuchtende Szene;
o eine optische Übertragungsvorrichtung (30) eines Teils des Primärsignals, Bezugssignal genannt, zu einer optischen Bildgebungsvorrichtung (40);
o wobei die optische Bildgebungsvorrichtung (40) geeignet ist, einen von der Szene rückgestreuten Teil des Objektsignals zu empfangen, rückgestreutes Objektsignal genannt, der ein Speckle-Muster aufweist;
o einen Matrix-Photodetektor (50), der eine Matrix von Erfassungspixeln (Pij) aufweist, die je dazu bestimmt sind, in einer der Szene durch das optisches Bildgebungssystem (40) zugeordneten Empfangsebene das rückgestreute Objektsignal und das Bezugssignal zu empfangen, die ein Überlagerungssignal formen, das eine so genannte Schwebungsfrequenz ($f_b$) aufweist, die für einen Abstand (D) zwischen dem Matrix-Photodetektor (50) und der beleuchteten Szene repräsentativ ist;
o **dadurch gekennzeichnet, dass** es eine Phasenkorrekturvorrichtung (60) aufweist, die aufweist:

- einen auf dem Pfad des Bezugssignals stromaufwärts vor der optischen Bildgebungsvorrichtung (40) angeordneten räumlichen Phasenmodulator (61), der geeignet ist, auf das Bezugssignal eine so genannte korrigierte räumliche Phasenverteilung ($\Phi_{mn}^{ref}(t_i)$) anzuwenden;
- eine Recheneinheit (62), die mit dem Matrix-Photodetektor (50) und mit dem räumlichen Phasenmodulator (61) verbunden und geeignet ist:

  - eine optimale korrigierte räumliche Phasenverteilung ($\Phi_{mn}^{ref,opt}(t_i)$) zu bestimmen, die vom räumlichen Phasenmodulator (61) auf das Bezugssignal anzuwenden ist,
  - abhängig von einer ersten räumlichen Verteilung, die für eine räumliche Stärkeverteilung ($I_{ij}^{or}(t_i)$) des rückgestreuten Objektsignals in der Empfangsebene repräsentativ ist, die vom Matrix-Photodetektor (50) erfasst wird,
  - so dass das Bezugssignal eine so genannte korrigierte räumliche Stärkeverteilung ($I_{ij}^{ref,opt}(t_i)$ in der Empfangsebene aufweist, die eine räumliche Verteilung eines für das Überlagerungssignal repräsentativen interessierenden Parameters optimiert, ausgewählt unter der Stärke ($I_{ij}^{het}(t_i)$) des Überlagerungssignals, einer Stärke einer alternativen Komponente ($AC_{ij}^{het}(t_i)$) des Überlagerungssignals oder eines Signal-Rausch-Verhältnisses ($SNR_{ij}^{het}(t_i)$).

**2.** Bildgebersystem (1) nach Anspruch 1, wobei die Erfassungspixel eine seitliche Abmessung ($d_{px}$) kleiner als $2\times\lambda\times NO$ aufweisen, wobei $\lambda$ die Wellenlänge des rückgestreuten Objektsignals und NO eine Blendenzahl der optischen Bildgebungsvorrichtung (40) ist.

**3.** Bildgebersystem (1) nach Anspruch 1 oder 2, wobei die optischen Projektions- (20) und Übertragungsvorrichtungen (30) optische Elemente im freien Raum aufweisen.

**4.** Bildgebersystem (1) nach Anspruch 3, wobei der räumliche Phasenmodulator (61) ein Flüssigkristall-Phasenmodulator ist.

**5.** Bildgebersystem (1) nach Anspruch 1 oder 2, wobei die optische Projektionsvorrichtung (20) optische Elemente in geführter Optik aufweist, die in einem funktionalisierten Substrat (2) hergestellt sind, darunter eine Matrix von Beugungsgittern (22), die geeignet ist, das Primärsignal durch einen Wellenleiter zu empfangen und das Objektsignal aus dem funktionalisierten Substrat (2) hinaus zu projizieren.

**6.** Bildgebersystem (1) nach Anspruch 5, wobei die Phasenkorrekturvorrichtung (60) optische Elemente in geführter Optik aufweist, die im funktionalisierten Substrat (2) hergestellt sind, wobei der räumliche Phasenmodulator eine Matrix von Beugungsgittern (61) aufweist, die geeignet ist, das Bezugssignal durch einen Wellenleiter zu empfangen und es aus dem funktionalisierten Substrat (2) hinaus zu projizieren, nachdem die korrigierte räumliche Phasenverteilung ($\Phi_{mn}^{ref}(t_i)$) auf es angewendet wurde.

**7.** Bildgebersystem (1) nach Anspruch 5 oder 6, wobei die optische Übertragungsvorrichtung (30) optische Elemente im freien Raum aufweist, die geeignet sind, das vom räumlichen Phasenmodulator (61) projizierte Bezugssignal in Richtung der optischen Bildgebungsvorrichtung (40) zu übertragen.

**8.** Bildgebersystem (1) nach einem der Ansprüche 5 bis 7, wobei die Matrix von Erfassungspixeln in oder auf dem funktionalisierten Substrat (2) hergestellt wird.

**9.** Bildgebersystem (1) nach einem der Ansprüche 1 bis 8, wobei die optischen Übertragungs- (30) und Bildgebungsvorrichtungen (40) geeignet sind, das Bezugssignal und das rückgestreute Objektsignal in Richtung des Matrix-Photodetektors (50) gemäß einer gleichen optischen Achse zu übertragen.

**10.** Bildgebersystem (1) nach einem der Ansprüche 1 bis 9, wobei:

o die optische Bildgebungsvorrichtung (40) mindestens ein optisches Element im freien Raum und eine Aperturblende, wodurch gegenüber dem Matrix-Photodetektor ein Bildfeldwinkel definiert wird, sowie eine zentrale Zone (Zc) aufweist, die seitlich von Strahlen des rückgestreuten Objektsignals eines Rands eines Felds vollen Lichts begrenzt wird, die sich bis zu so genannten Enderfassungspixeln ausbreiten, die sich an der Umrandung der Erfassungsmatrix befinden;

o die optische Übertragungsvorrichtung (30) und die optische Bildgebungsvorrichtung (40) geeignet sind, ein Bild des Bezugssignals in einer Zwischenebene orthogonal zur optischen Achse der optischen Bildgebungsvorrichtung (40) zu formen, wodurch eine äquivalente Lichtquelle (36) des Bezugssignals geformt wird;

• wobei die äquivalente Lichtquelle (36) in der zentralen Zone (Zc) der Strahlen des rückgestreuten Objektsignals eines Rands eines Felds vollen Lichts enthalten ist;
• wobei die äquivalente Lichtquelle (36) an jedem Punkt einen Aussendewinkel des Bezugssignals mindestens gleich dem Bildfeldwinkel der optischen Bildgebungsvorrichtung (40) aufweist.

**11.** Bildgebersystem (1) nach Anspruch 10, wobei die äquivalente Lichtquelle (36) eine seitliche Abmessung mindestens gleich derjenigen der zentralen Zone (Zc) der Strahlen des rückgestreuten Objektsignals eines Rands eines Felds vollen Lichts aufweist.

**12.** Verfahren zur Bestimmung einer Abstandskartierung der Szene durch ein Bildgebersystem (1) nach einem der vorhergehenden Ansprüche, wobei der interessierende Parameter die Stärke des Überlagerungssignals ist, wobei das Verfahren die folgenden Schritte aufweist:

o a/ Projektion, durch die optische Projektionsvorrichtung (20), des Objektsignals zur Szene, um sie augenblicklich zu beleuchten;
o b/ Erfassung, durch den Matrix-Photodetektor (50), der ersten räumlichen Stärkeverteilung eines einfallenden optischen Signals, das für das rückgestreute Objektsignal repräsentativ ist;
o c/ Bestimmung, durch die Recheneinheit (62), der korrigierten räumlichen Phasenverteilung, die vom räumlichen Phasenmodulator (61) auf das Bezugssignal anzuwenden ist;
o d/ Anwendung, durch den räumlichen Phasenmodulator (61), der korrigierten räumlichen Phasenverteilung auf das Bezugssignal;
o e/ Erfassung, durch den Matrix-Photodetektor (50), einer räumlichen Stärkeverteilung des Überlagerungssignals;
o f/ Bestimmung, durch die Recheneinheit (62), der räumlichen Verteilung des interessierenden Parameters ausgehend von der erfassten räumlichen Stärkeverteilung des Überlagerungssignals;
o ggf. Wiederholung der Schritte c/ bis f/ durch Änderung der korrigierten räumlichen Phasenverteilung, bis ein Bestimmungskriterium abhängig von der räumlichen Verteilung des interessierenden Parameters einen vordefinierten Schwellwert erreicht;
o g/ wenn das Bestimmungskriterium den vordefinierten Schwellwert erreicht, Bestimmung der Abstandskartierung.

**13.** Verfahren nach Anspruch 12, wobei:

o im Schritt b/ Unterbrechung der Übertragung des Bezugssignals, so dass das einfallende optische Signal das rückgestreute Objektsignal ist;
o im Schritt c/ Bestimmung der korrigierten räumlichen Phasenverteilung, so dass die räumliche Stärkeverteilung des Bezugssignals in der Empfangsebene im Wesentlichen gleich der räumlichen Stärkeverteilung des erfassten rückgestreuten Objektsignals ist, ausgehend von einer vordefinierten Transferfunktion, die die räumliche Stärkeverteilung des Bezugssignals in der Empfangsebene abhängig von einer vom räumlichen Phasenmodulator (61) angewendeten räumlichen Phasenverteilung ausdrückt;
o im Schritt d/ die Übertragung des Bezugssignals nicht mehr unterbrochen ist.

**14.** Verfahren nach Anspruch 12, wobei:

o im Schritt b/ das erfasste optische Signal das Überlagerungssignal ist;
o die Schritte c/ bis f/ wiederholt werden, wobei die räumliche Phasenverteilung abhängig vom Optimierungskriterium bei der vorhergehenden Wiederholung geändert wird, abhängig von einem vordefinierten Optimierungsalgorithmus, bis das Optimierungskriterium den vordefinierten Schwellwert erreicht, wodurch die räumliche Verteilung des interessierenden Parameters optimiert wird.

## Claims

**1.** LIDAR imaging system (1) of the FMCW type, comprising:

◦ a coherent light source (10) adapted to emit a continuous frequency modulated primary signal;
◦ an optical device (20) for projecting part of the primary signal, called object signal, onto a scene to be instantaneously illuminated;
◦ an optical device (30) for transmitting part of the primary signal, called reference signal, to an optical imaging device (40);
◦ the optical imaging device (40) being adapted to receive part of the object signal backscattered by the scene, called backscattered object signal, having a speckle pattern;
◦ a matrix photodetector (50) comprising a matrix of detection pixels ($P_{ij}$), each intended to receive, in a reception plane conjugated with the scene by the optical imaging system (40), the backscattered object signal and the reference signal that form a heterodyne signal having a frequency, called beat frequency ($f_b$), representing a distance (D) between the matrix photodetector (50) and the illuminated scene;

◦ **characterized in that** it comprises a phase correction device (60), comprising:

• a spatial phase modulator (61), arranged on the path of the reference signal upstream of the optical imaging device (40), adapted to apply a spatial phase distribution, called corrected spatial phase distribution ($\varphi_{mn}^{ref}(t_i)$), to the reference signal;

• a computation unit (62) connected to the matrix photodetector (50) and to the spatial phase modulator (61) and adapted to:

- determine an optimal corrected spatial phase distribution ($\varphi_{mn}^{ref,opt}(t_i)$) to be applied to the reference signal by the spatial phase modulator (61),
- as a function of a first spatial distribution representing a spatial intensity distribution ($I_{ij}^{or}(t_i)$) of the backscattered object signal in the reception plane, detected by the matrix photodetector (50),
- so that the reference signal has a spatial intensity distribution, called corrected spatial intensity distribution ($I_{ij}^{ref,opt}(t_i)$), in the reception plane optimizing a spatial distribution of a parameter of interest representing the heterodyne signal, selected from among the intensity ($I_{ij}^{het}(t_i)$) of the heterodyne signal, an intensity of an alternating component ($AC_{ij}^{het}(t_i)$) of the heterodyne signal, or a signal-to-noise ratio ($SNR_{ij}^{het}(t_i)$).

**2.** Imaging system (1) according to Claim 1, wherein the detection pixels have a lateral dimension ($d_{px}$) that is less than $2\times\lambda\times NO$, where $\lambda$ is the wavelength of the backscattered object signal and where NO is a number of apertures of the optical imaging device (40).

**3.** Imaging system (1) according to Claim 1 or 2, wherein the optical projection (20) and transmission (30) devices comprise free space optical elements.

**4.** Imaging system (1) according to Claim 3, wherein the spatial phase modulator (61) is a liquid crystal phase modulator.

**5.** Imaging system (1) according to Claim 1 or 2, wherein the optical projection device (20) comprises guided optic optical elements produced in a functionalized substrate (2), including a diffraction gratings matrix (22) adapted to receive the primary signal via a waveguide and to project the object signal out of the functionalized substrate (2).

**6.** Imaging system (1) according to Claim 5, wherein the phase correction device (60) comprises guided optic optical elements produced in said functionalized substrate (2), the spatial phase modulator comprising a diffraction gratings matrix (61) adapted to receive the reference signal via a waveguide and to project it out of the functionalized substrate (2) after having applied the corrected spatial phase distribution ($\varphi_{mn}^{ref}(t_i)$) thereto.

**7.** Imaging system (1) according to Claim 5 or 6, wherein the optical transmission device (30) comprises free space optical elements adapted to transmit the reference signal projected by the spatial phase modulator (61) towards the optical imaging device (40).

**8.** Imaging system (1) according to any one of Claims 5 to 7, wherein the matrix of detection pixels is produced in or on said functionalized substrate (2).

**9.** Imaging system (1) according to any one of Claims 1 to 8, wherein the optical transmission (30) and imaging (40) devices are adapted to transmit the reference signal and the backscattered object signal towards the matrix photodetector (50) along the same optical axis.

**10.** Imaging system (1) according to any one of Claims 1 to 9, wherein:

◦ the optical imaging device (40) comprises at least one free space optical element and an aperture diaphragm, thus defining, with respect to the matrix photodetector, a field of view, as well as a central zone (Zc) laterally demarcated by rays of the unvignetted field backscattered object signal that propagate up to detection pixels, called end pixels, located at the edge of the detection matrix;

◦ the optical transmission device (30) and the optical imaging device (40) are adapted to form an image of the reference signal in an intermediate plane orthogonal to the optical axis of the optical imaging device (40), thus forming an equivalent light source (36) of the reference signal;

• the equivalent light source (36) being contained in the central zone (Zc) of the rays of the unvignetted field backscattered object signal;

• the equivalent light source (36) having, at each point, an emission angle for the reference signal that is at least equal to said field of view of the optical imaging device (40).

**11.** Imaging system (1) according to Claim 10, wherein the equivalent light source (36) has a lateral dimension that is at least equal to that of the central zone (Zc) of the rays of the unvignetted field backscattered object signal.

**12.** Method for determining a distance map of the scene using an imaging system (1) according to any one of the preceding claims, wherein the parameter of interest is the intensity of the heterodyne signal, the method comprising the following steps:

◦ a/ projecting, by the optical projection device (20), the object signal towards the scene in order to instantaneously illuminate the scene;
◦ b/ detecting, by the matrix photodetector (50), the first spatial intensity distribution of an incident optical signal representing the backscattered object signal;
◦ c/ determining, by the computation unit (62), the corrected spatial phase distribution to be applied to the reference signal by the spatial phase modulator (61);
◦ d/ applying, by the spatial phase modulator (61), the corrected spatial phase distribution to the reference signal;
◦ e/ detecting, by the matrix photodetector (50), a spatial intensity distribution of the heterodyne signal;
◦ f/ determining, by the computation unit (62), the spatial distribution of the parameter of interest, on the basis of the detected spatial intensity distribution of the heterodyne signal;
◦ repeating, if applicable, steps c/ to f/ by modifying the corrected spatial phase distribution until a determination criterion that is a function of the spatial distribution of the parameter of interest reaches a predefined threshold value;
◦ g/ determining the distance map when the determination criterion reaches the predefined threshold value.

**13.** Method according to Claim 12, wherein:

◦ during step bl, the transmission of the reference signal is suspended, so that the incident optical signal is the backscattered object signal;
◦ during step c/, the corrected spatial phase distribution is determined, so that the spatial intensity distribution of the reference signal in the reception plane is substantially equal to the spatial intensity distribution of the detected backscattered object signal, on the basis of a predefined transfer function expressing the spatial intensity distribution of the reference signal in the reception plane as a function of a spatial phase distribution applied by the spatial phase modulator (61);
◦ during step d/, the transmission of the reference signal is no longer suspended.

**14.** Method according to Claim 12, wherein:

◦ during step b/, the detected optical signal is the heterodyne signal;
◦ steps c/ to f/ are repeated, with the spatial phase distribution being modified as a function of the optimization criterion in the previous iteration, as a function of a predefined optimization algorithm, until the optimization criterion reaches the predefined threshold value, thus optimizing the spatial distribution of the parameter of interest.

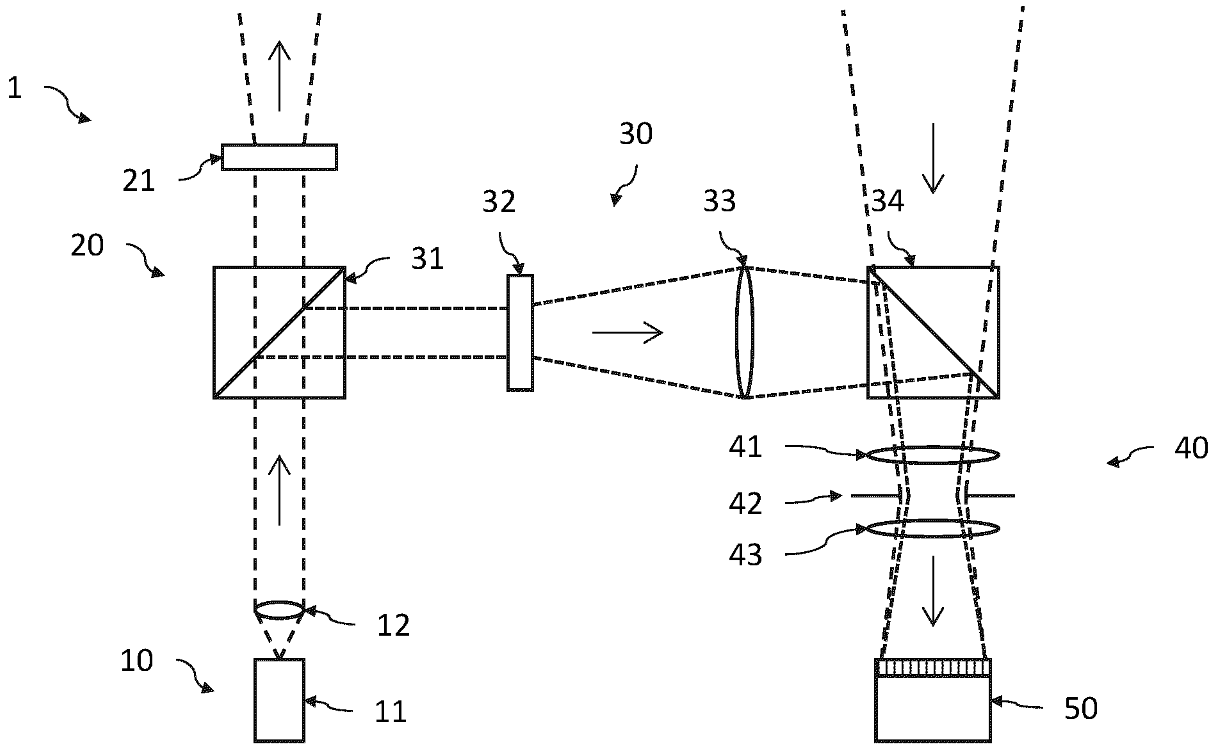
1
21
20
31
32
30
33
34
41
42
43
40
12
10
11
50

Fig.1A

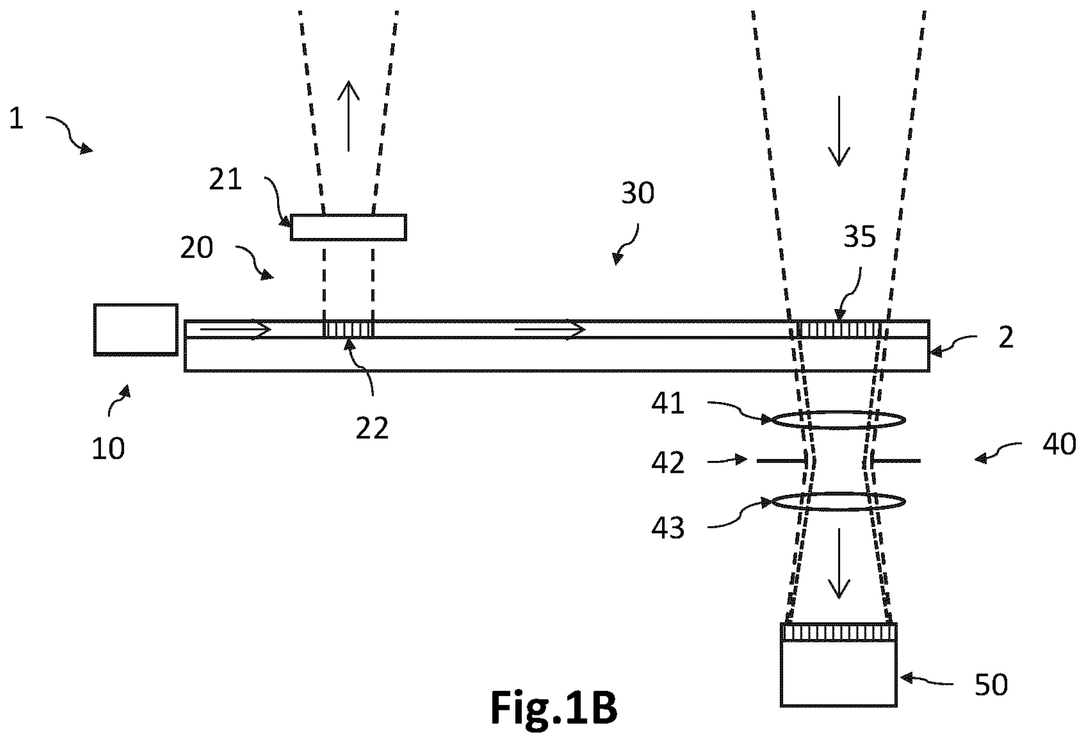
1
21
20
30
35
2
22
10
41
42
43
40
50

Fig.1B

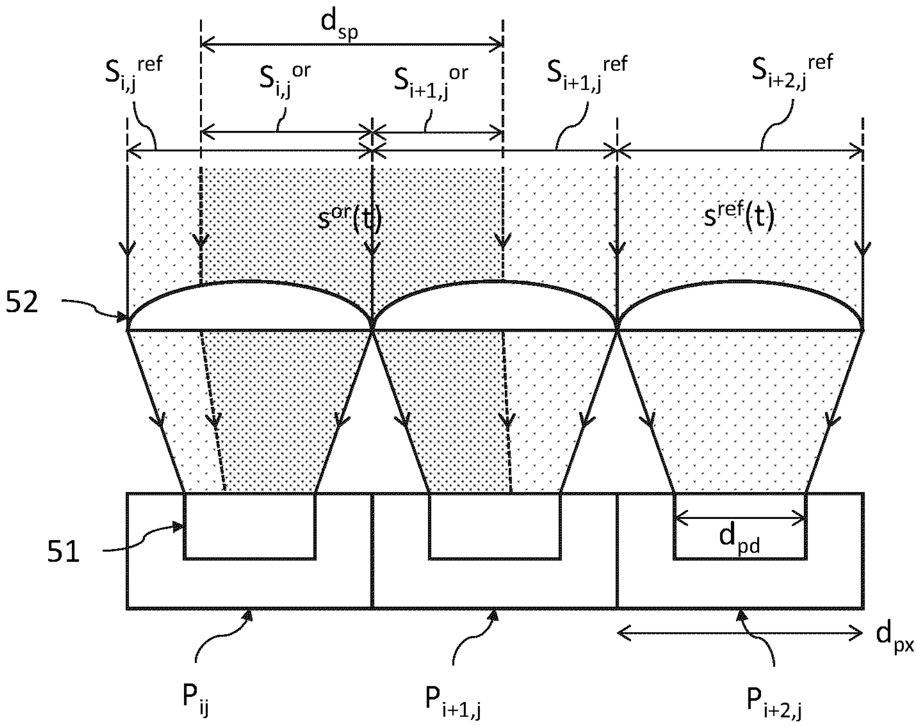

$d_{sp}$
$S_{i,j}^{ref}$
$S_{i,j}^{or}$
$S_{i+1,j}^{or}$
$S_{i+1,j}^{ref}$
$S_{i+2,j}^{ref}$
$s^{or}(t)$
$s^{ref}(t)$
52
51
$d_{pd}$
$d_{px}$
$P_{ij}$
$P_{i+1,j}$
$P_{i+2,j}$


**Fig.2A**

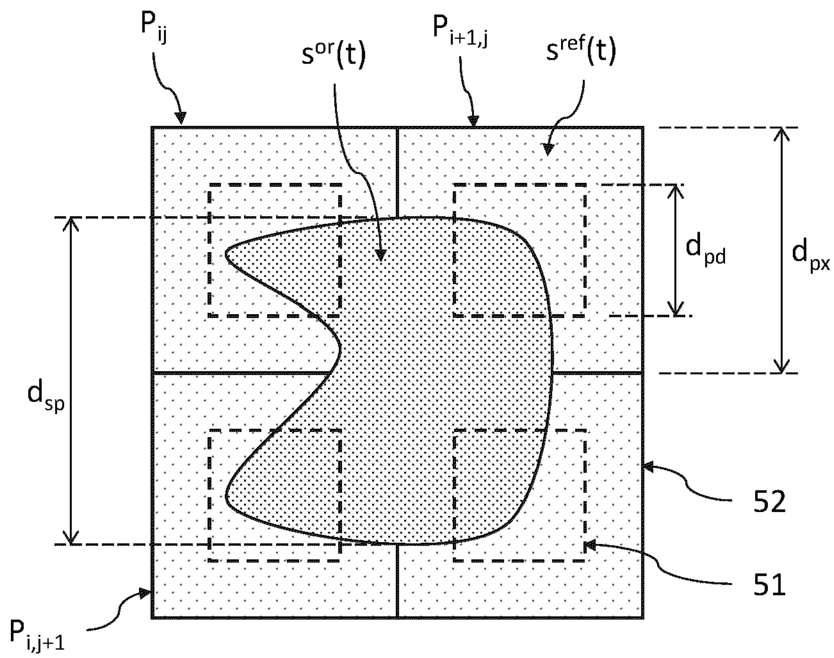

$P_{ij}$
$s^{or}(t)$
$P_{i+1,j}$
$s^{ref}(t)$
$d_{pd}$
$d_{px}$
$d_{sp}$
52
51
$P_{i,j+1}$


**Fig.2B**

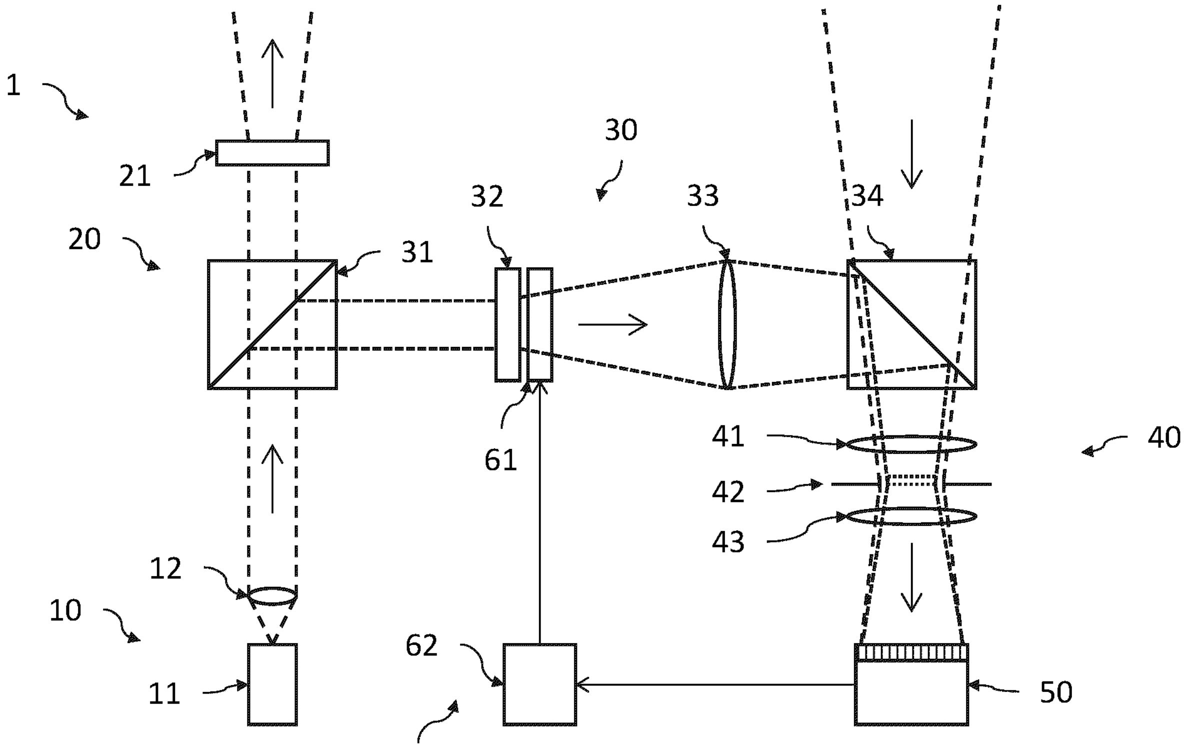
1
21
20
31
30
32
33
34
61
41
42
43
40
12
10
11
62
60
50

Fig.3A

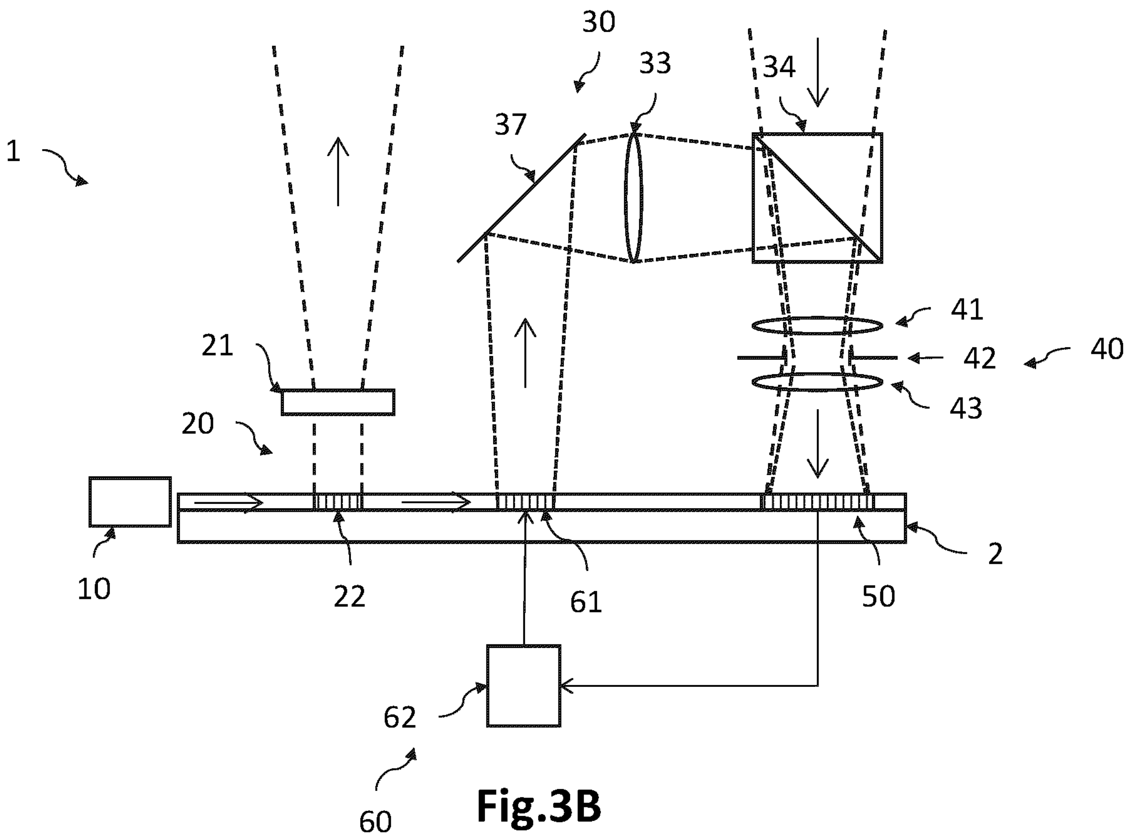
30
33
34
37
1
41
42
40
43
21
20
10
22
61
50
2
62
60

Fig.3B

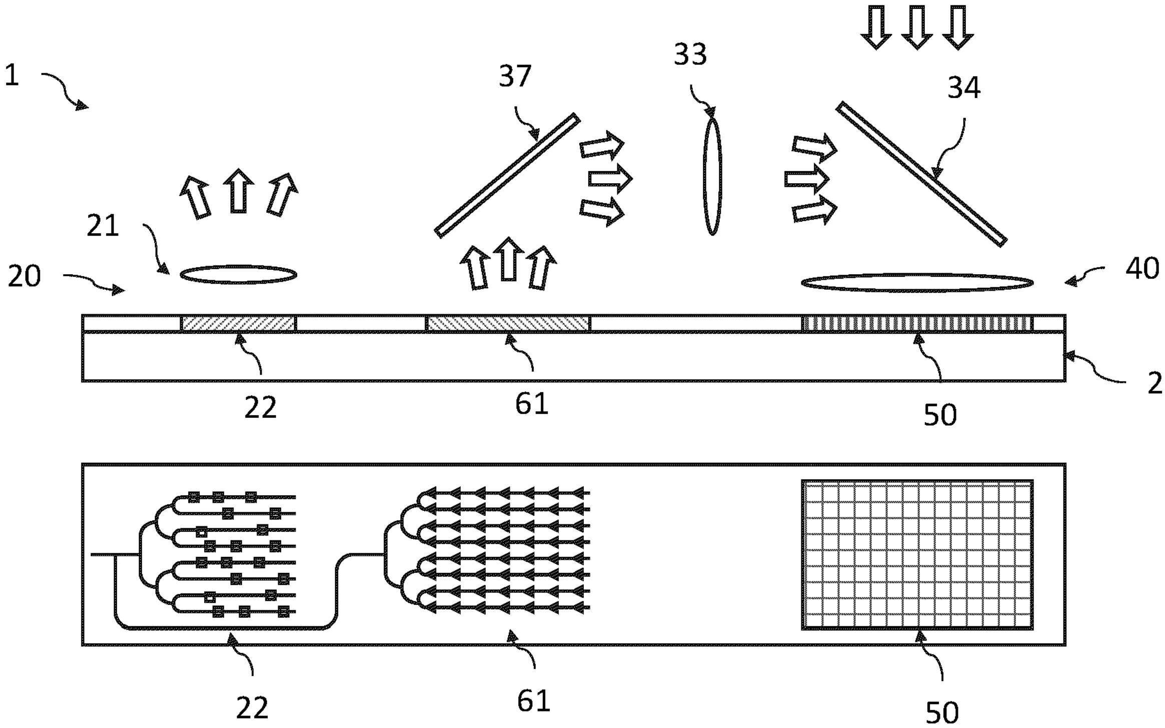


Fig.4A

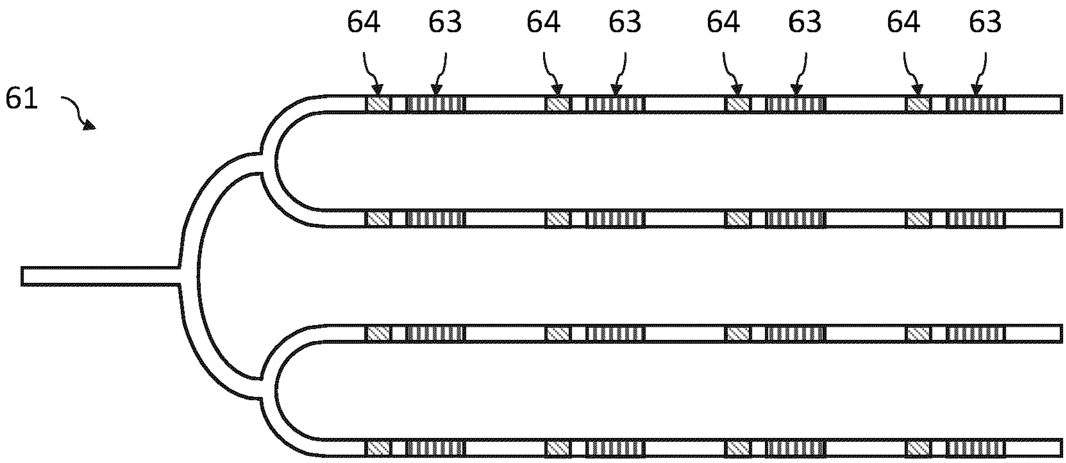


Fig.4B

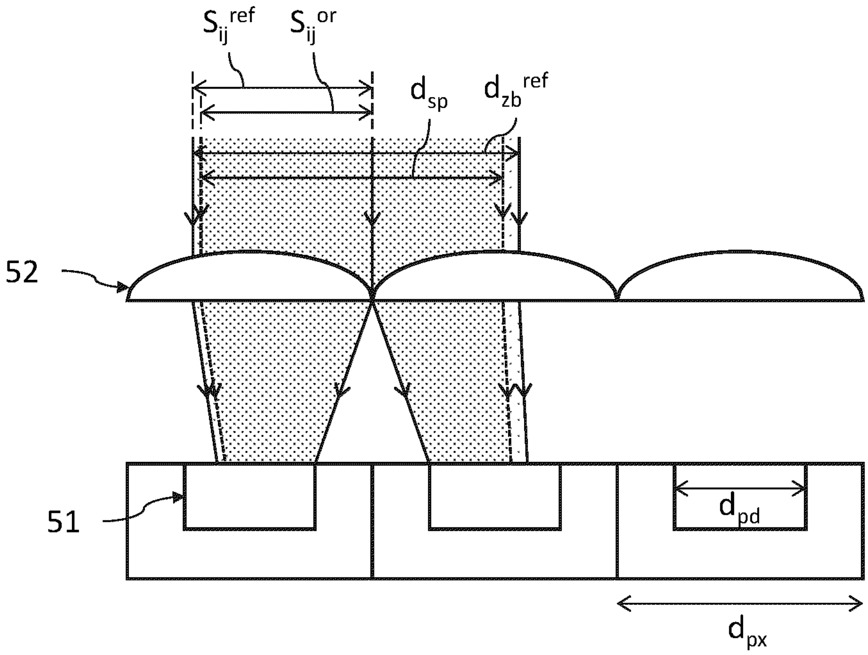


Fig.5A

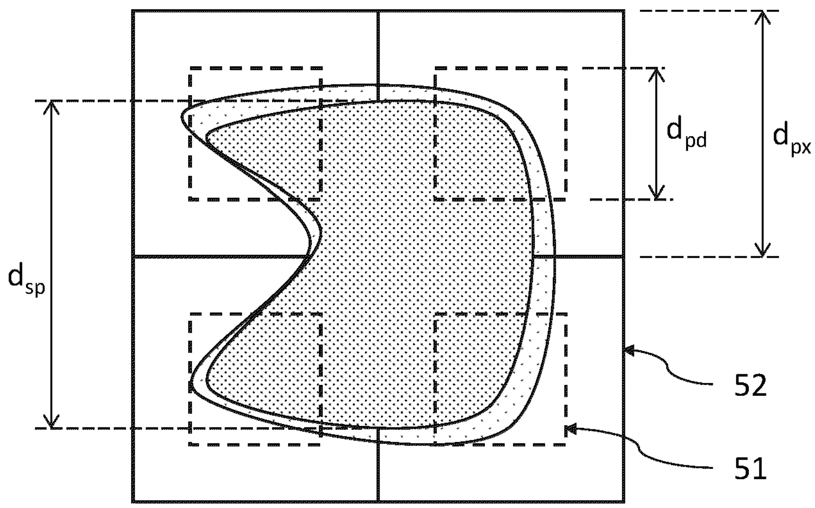


Fig.5B

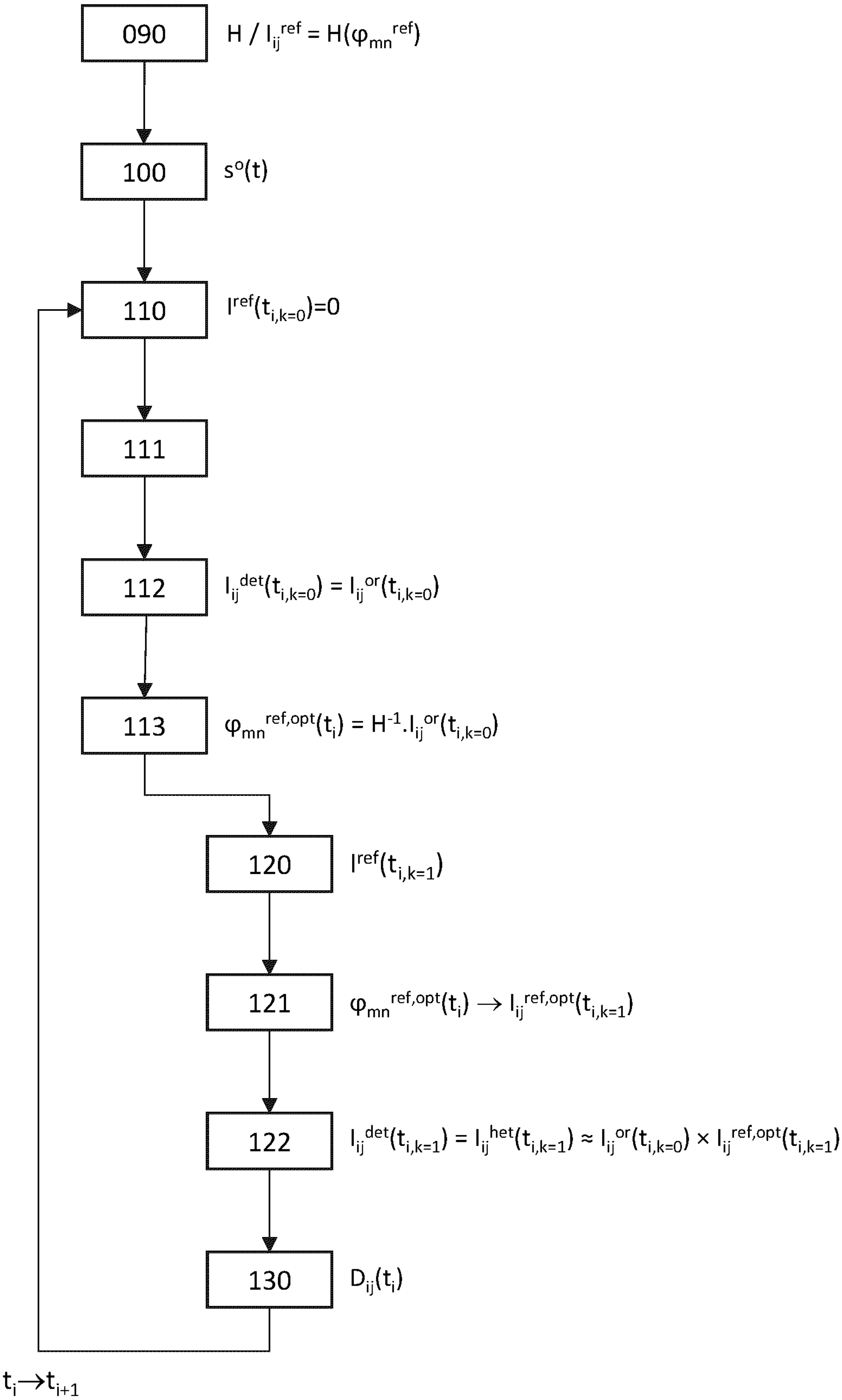
090
$H / I_{ij}^{ref} = H(\varphi_{mn}^{ref})$
100
$s^{o}(t)$
110
$I^{ref}(t_{i,k=0})=0$
111
112
$I_{ij}^{det}(t_{i,k=0}) = I_{ij}^{or}(t_{i,k=0})$
113
$\varphi_{mn}^{ref,opt}(t_i) = H^{-1}.I_{ij}^{or}(t_{i,k=0})$
120
$I^{ref}(t_{i,k=1})$
121
$\varphi_{mn}^{ref,opt}(t_i) \rightarrow I_{ij}^{ref,opt}(t_{i,k=1})$
122
$I_{ij}^{det}(t_{i,k=1}) = I_{ij}^{het}(t_{i,k=1}) \approx I_{ij}^{or}(t_{i,k=0}) \times I_{ij}^{ref,opt}(t_{i,k=1})$
130
$D_{ij}(t_i)$
$t_i \rightarrow t_{i+1}$

**Fig.6A**

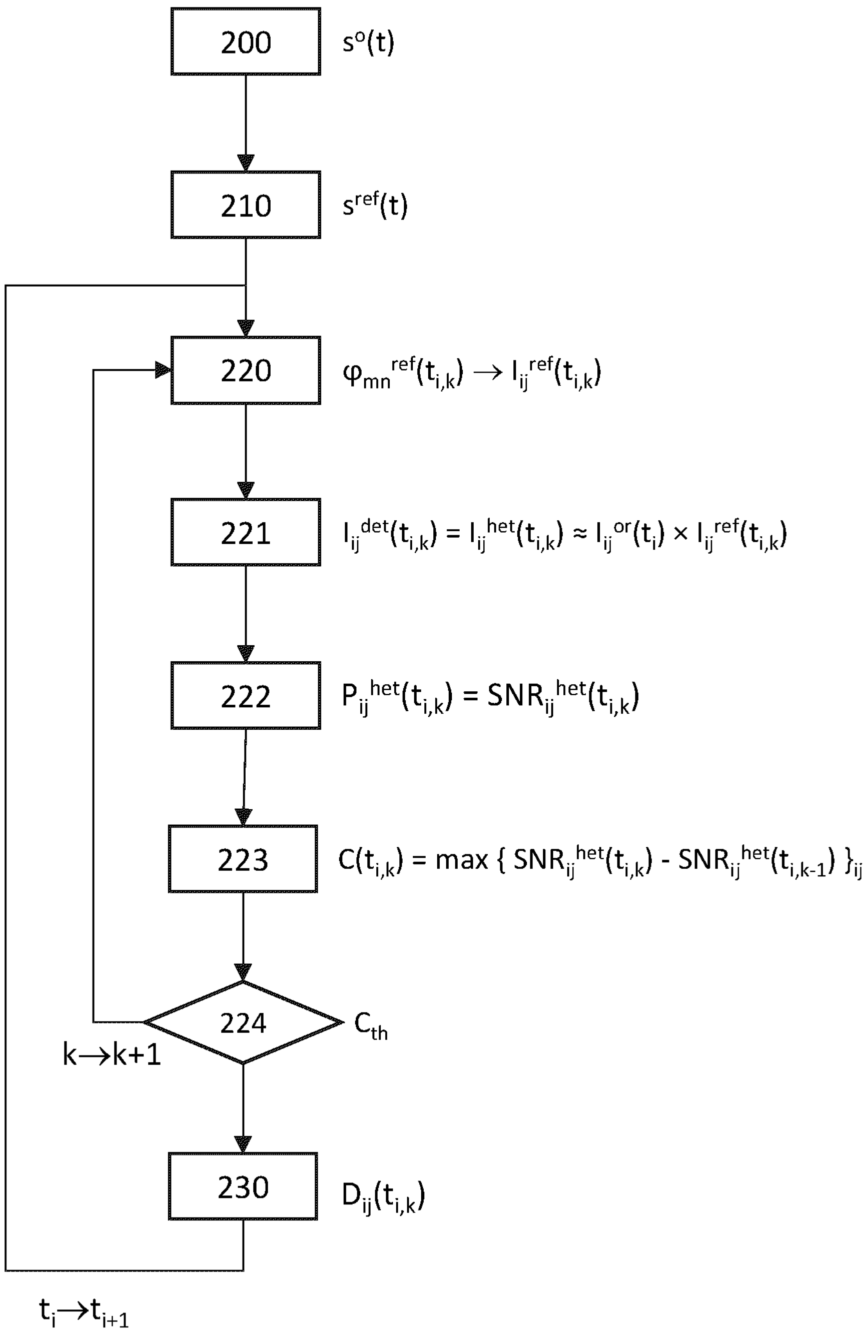
200
$s^o(t)$
210
$s^{ref}(t)$
220
$\varphi_{mn}^{ref}(t_{i,k}) \rightarrow I_{ij}^{ref}(t_{i,k})$
221
$I_{ij}^{det}(t_{i,k}) = I_{ij}^{het}(t_{i,k}) \approx I_{ij}^{or}(t_i) \times I_{ij}^{ref}(t_{i,k})$
222
$P_{ij}^{het}(t_{i,k}) = SNR_{ij}^{het}(t_{i,k})$
223
$C(t_{i,k}) = \max \{ SNR_{ij}^{het}(t_{i,k}) - SNR_{ij}^{het}(t_{i,k-1}) \}_{ij}$
224
$C_{th}$
$k \rightarrow k+1$
230
$D_{ij}(t_{i,k})$
$t_i \rightarrow t_{i+1}$

Fig.6B

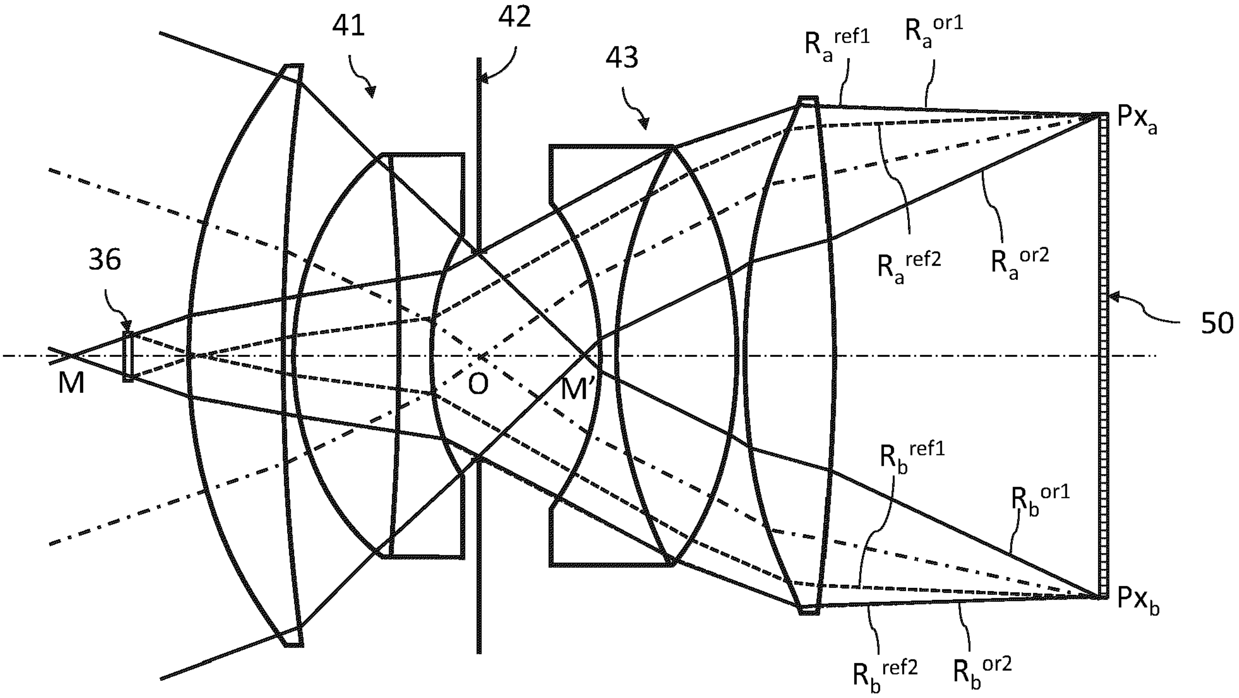
41
42
43
$R_a^{ref1}$
$R_a^{or1}$
$Px_a$
36
$R_a^{ref2}$
$R_a^{or2}$
50
M
O
M'
$R_b^{ref1}$
$R_b^{or1}$
$Px_b$
$R_b^{ref2}$
$R_b^{or2}$

Fig.7A

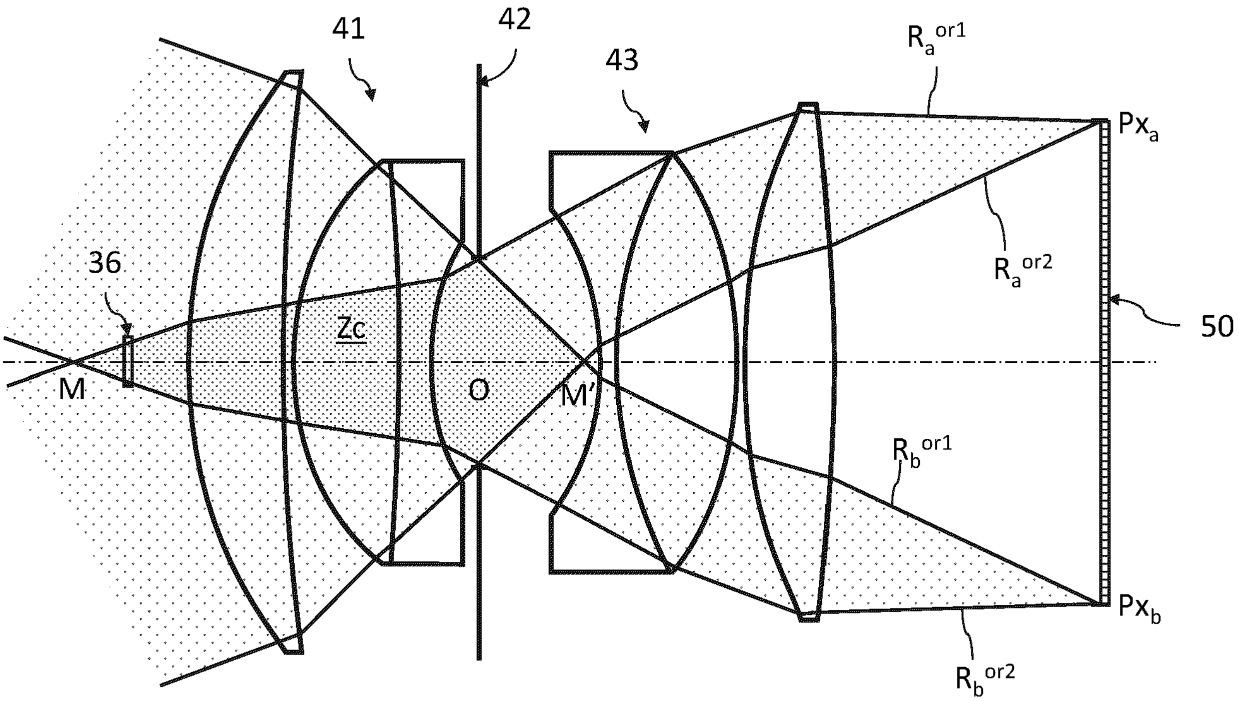
41
42
43
$R_a^{or1}$
$Px_a$
36
$R_a^{or2}$
50
Zc
M
O
M'
$R_b^{or1}$
$Px_b$
$R_b^{or2}$

Fig.7B

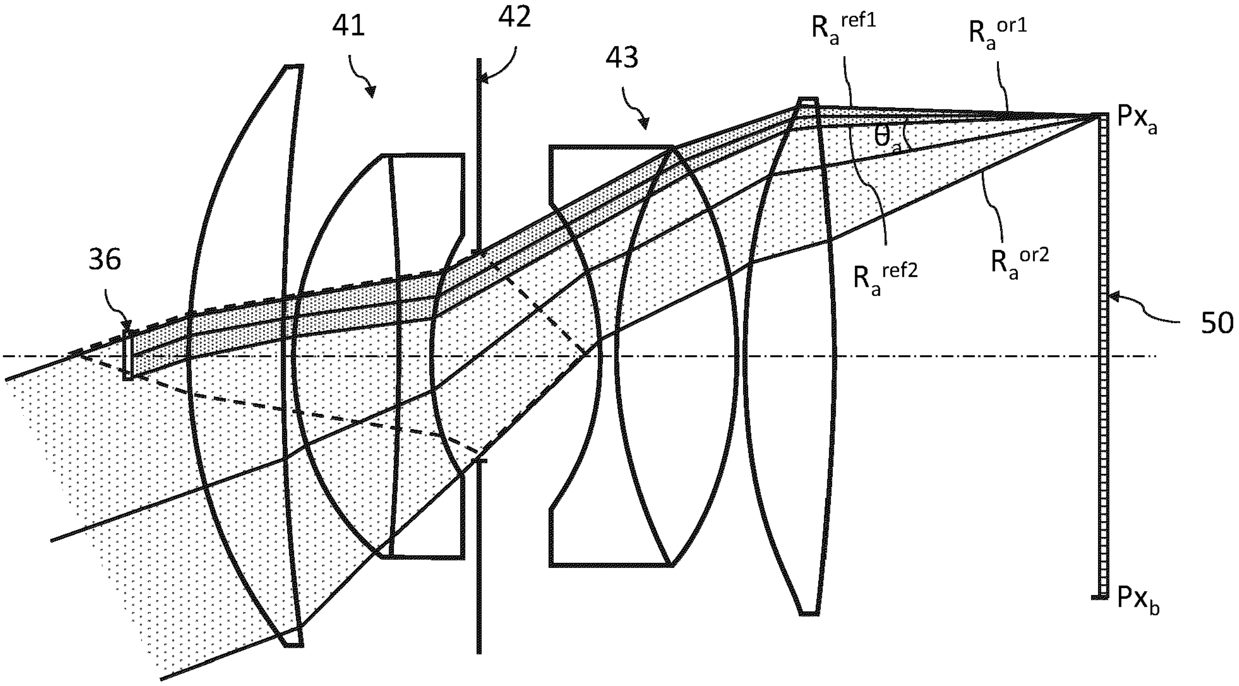
41
42
43
$R_a^{ref1}$
$R_a^{or1}$
$Px_a$
$\theta_a$
36
$R_a^{ref2}$
$R_a^{or2}$
50
$Px_b$

Fig.7C

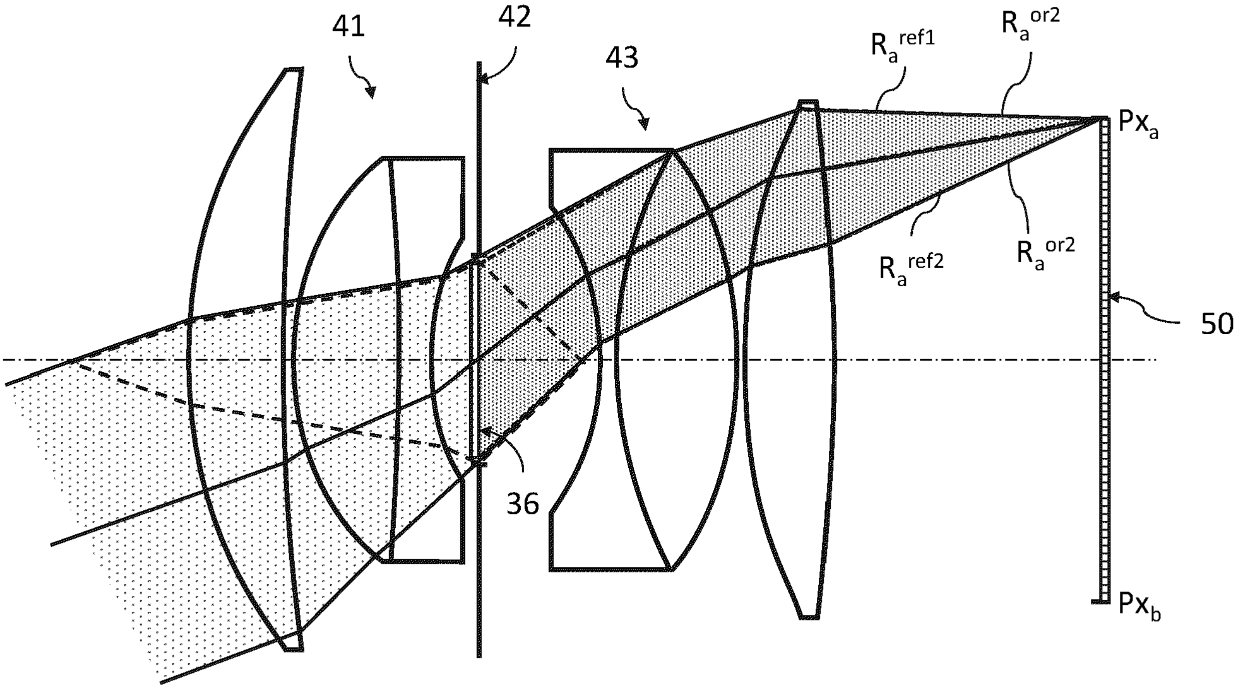
41
42
43
$R_a^{ref1}$
$R_a^{or2}$
$Px_a$
$R_a^{ref2}$
$R_a^{or2}$
50
36
$Px_b$

Fig.7D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2015177380 A1
- US 2020256995 A1
- FR 2000408


### Littérature non-brevet citée dans la description


- **AFLATOUNI et al.** Nanophotonic cohérent imager. *Opt. Express,* 2015, vol. 23 (4), 5117-5125